# EUROPEAN PATENT APPLICATION

(11) **EP 4 742 807 A1**
(43) Date of publication of application: **13.05.2026**
(21) Application number: 25209683.9
(22) Date of filing: 20.10.2025
(51) Int. Cl.: H04W 74/00

(54) **METHODS, SYSTEMS, AND APPARATUSES FOR CONCURRENT RECEPTION FOR NON-PRIMARY CHANNEL ACCESS**

(30) Priority: 08.11.2024 US 202418941245
(71) Applicant: Nokia Technologies Oy, 02610 Espoo (FI)
(72) Inventor: TALARICO, Salvatore, Sunnyvale (US); DOPPLER, Klaus Franz, Albany (US); DEZFOULI, Behnam, San Jose (US); JOHNSSON, Kerstin, Palo Alto (US); LEE, Juhyung, Santa Clara (US); VARSHNEY, Prabodh, Irving (US); MUTGAN, Orhan Okan, Munich (DE); COSTA, Mario, Espoo (FI); KASSLIN, Mika, Espoo (FI); LIUBOGOSHCHEV, Mikhail, Munich (DE); CHISTYAKOV, Oleg, Espoo (FI); RANTALA, Enrico, Helsinki (FI); GENC, Eda, Espoo (FI)
(74) Representative: Nokia EPO representatives

(57) **Abstract**

Methods, apparatuses, and systems provide recovery for concurrent reception for non-primary channel access. In the context of a method, the method includes transmitting a first message via a first primary channel associated with a basic service set, the first message comprising first information indicating a first capability of an apparatus to communicate via non-primary channel access; and receiving a second message from a second apparatus via the first primary channel in response to the first message, the second message comprising second information indicating a second capability of the second apparatus to communicate via the non-primary channel access.

## Description

### TECHNOLOGICAL FIELD

Various aspects of the present disclosure relate generally to techniques for non-primary channel access (NPCA) and, more particularly, to a framework for concurrent reception for NPCA.

### BACKGROUND

Wireless communication networks, such as wireless fidelity (Wi-Fi) networks, may support latency-sensitive applications at Wi-Fi stations (STAs). Some such applications include virtual reality (VR) applications, mixed reality (MR) applications, and augmented reality (XR) applications. In some cases, reliability and non-deterministic channel access, such as for wideband transmissions, may constrain a performance of latency-sensitive applications.

### BRIEF SUMMARY

Methods, apparatuses, and systems are disclosed for non-primary channel access (NPCA). In this regard, the methods, apparatuses, and systems are configured to support a framework for concurrent reception for NPCA. For example, the methods, apparatuses, and systems are configured to support the exchange of NPCA information between NPCA-capable devices. By providing for the exchange of NPCA information between NPCA-capable devices, the methods, apparatuses, and systems may provide for reduced latency and improved performance of wireless communications in the network.

In at least one example embodiment, an apparatus is provided comprising at least one processor and at least one memory including computer program code (e.g., instructions) configured to, with the at least one processor, cause the apparatus at least to transmit a first message via a first primary channel associated with a basic service set, the first message comprising first information indicating a first capability of the apparatus to communicate via non-primary channel access; and receive a second message from a second apparatus via the first primary channel in response to the first message, the second message comprising second information indicating a second capability of the second apparatus to communicate via the non-primary channel access.

In at least one example embodiment, the instructions, when executed by the at least one processor, causes the apparatus to transmit third information indicating enablement of the first capability at the apparatus.

In at least one example embodiment, to transmit the third information, the instructions, when executed by the at least one processor, causes the apparatus to transmit a message comprising the third information over a plurality of time-domain resources, wherein a first one or more time-domain resources of the plurality of time-domain resources are associated with the transmission of the third information, and wherein a second one or more time-domain resources of the plurality of time-domain resources are associated with a switch from the first primary channel to at least one primary channel associated with the non-primary channel access.

In at least one example embodiment, a quantity of time-domain resources included in the second one or more time-domain resources is based at least in part on the second capability.

In at least one example embodiment, the instructions, when executed by the at least one processor, causes the apparatus to, receive, in response to the third information, fourth information indicating at least one of the following: an acknowledgement of the enablement of the first capability, a set of one or more candidate primary channels for the non-primary channel access, or a capability to detect packets on both the first primary channel and at least one channel associated with the non-primary channel access.

In at least one example embodiment, the transmission of the third information is based at least in part on at least one of the following: a quantity of apparatuses associated with the basic service set having a capability to communicate via the non-primary channel access, a capability of the apparatus or the second apparatus to support a threshold bandwidth associated with the non-primary channel access, or a determination that one or more apparatuses associated with the basic service set are to communicate via the non-primary channel access.

In at least one example embodiment, the instructions, when executed by the at least one processor, causes the apparatus to, based at least in part on the second capability, transmit a third message indicating activation of the non-primary channel access for communication between the apparatus and the second apparatus.

In at least one example embodiment, the third message is indicative of at least one of the following: an indication of a second primary channel for the non-primary channel access, an indication of an operating bandwidth associated with the second primary channel, or an indication of a center frequency associated with the second primary channel.

In at least one example embodiment, the instructions, when executed by the at least one processor, causes the apparatus to, based at least in part on the first capability, perform at least one of carrier sensing or packet detection on the first primary channel and at least one primary channel associated with the non-primary channel access.

In at least one example embodiment, the instructions, when executed by the at least one processor, causes the apparatus to, based at least in part on the second capability, transmit a fourth message to the second apparatus via a second primary channel associated with the non-primary channel access.

In at least one example embodiment, the instructions, when executed by the at least one processor, causes the apparatus to select a transmission bandwidth for the transmission of the fourth message via the second primary channel based at least in part on one or more criteria.

In at least one example embodiment, the first message indicates a set of candidate primary channels for the non-primary channel access, and wherein the second primary channel is one of the set of candidate primary channels.

In at least one example embodiment, the second message indicates a selection of the second primary channel from among the set of candidate primary channels.

In at least one example embodiment, the instructions, when executed by the at least one processor, causes the apparatus to select the second primary channel based at least in part on: the second primary channel satisfying a criterion, a position in the frequency-domain of the second primary channel relative to the first primary channel, or the second primary channel comprising one or more frequencies of an operating bandwidth associated with the second apparatus.

In at least one example embodiment, the apparatus is an access point, and wherein the second primary channel is based at least in part on a basic service set identifier associated with the access point and one or more other access points.

In at least one example embodiment, the instructions, when executed by the at least one processor, causes the apparatus to receive, from the second apparatus, a request to communicate via one or more primary channels associated with the non-primary channel access.

In at least one example embodiment, the instructions, when executed by the at least one processor, causes the apparatus to transmit third information indicating disablement of the first capability at the apparatus; and transmit a message over the first primary channel based at least in part on the disablement.

In at least one example embodiment, the first capability comprises a capability of the apparatus to perform packet detection concurrently on the first primary channel and at least one channel associated with the non-primary channel access, and wherein the second capability comprises a capability of the second apparatus to perform packet detection concurrently on the first primary channel and the at least one channel associated with the non-primary channel access.

In at least one example embodiment, an apparatus is provided comprising at least one processor and at least one memory including computer program code (e.g., instructions) configured to, with the at least one processor, cause the apparatus at least to receive, from a second apparatus, a first message via a first primary channel associated with a basic service set, the first message comprising first information indicating a first capability of the second apparatus to communicate via non-primary channel access; and transmit a second message to the second apparatus via the first primary channel in response to the first message, the second message comprising second information indicating a second capability of the apparatus to communicate via the non-primary channel access.

In at least one example embodiment, the instructions, when executed by the at least one processor, causes the apparatus to receive third information indicating enablement of the first capability at the second apparatus.

In at least one example embodiment, to receive the third information, the instructions, when executed by the at least one processor, causes the apparatus to receive a message comprising the third information over a plurality of time-domain resources, wherein a first one or more time-domain resources of the plurality of time-domain resources are associated with reception of the third information, and wherein a second one or more time-domain resources of the plurality of time-domain resources are associated with a switch from the first primary channel to at least one primary channel associated with the non-primary channel access.

In at least one example embodiment, the instructions, when executed by the at least one processor, causes the apparatus to, perform the switch from the first primary channel to the at least one primary channel over the second one or more time-domain resources.

In at least one example embodiment, a quantity of time-domain resources included in the second one or more time-domain resources is based at least in part on the second capability.

In at least one example embodiment, the instructions, when executed by the at least one processor, causes the apparatus to, in response to the third information, transmit fourth information indicating at least one of the following: an acknowledgement of the enablement of the first capability, a set of one or more candidate primary channels for the non-primary channel access, or a capability to detect packets on both the first primary channel and at least one channel associated with the non-primary channel access.

In at least one example embodiment, reception of the third information is based at least in part on at least one of the following: a quantity of apparatuses associated with the basic service set having a capability to communicate via the non-primary channel access, a capability of the apparatus or the second apparatus to support a threshold bandwidth associated with the non-primary channel access, or a determination that one or more apparatuses associated with the basic service set are to communicate via the non-primary channel access.

In at least one example embodiment, the instructions, when executed by the at least one processor, causes the apparatus to, based at least in part on the second capability, receive a third message indicating activation of the non-primary channel access for communication between the apparatus and the second apparatus.

In at least one example embodiment, the third message is indicative of at least one of the following: an indication of a second primary channel for the non-primary channel access, an indication of an operating bandwidth associated with the second primary channel, or an indication of a center frequency associated with the second primary channel.

In at least one example embodiment, the instructions, when executed by the at least one processor, causes the apparatus to, based at least in part on the second capability, perform at least one of carrier sensing or packet detection on the first primary channel and a second primary channel associated with the non-primary channel access; and based at least in part on the at least one of the carrier sensing or packet detection, determine to use the first primary channel or the second primary channel for communication with the second apparatus.

In at least one example embodiment, the instructions, when executed by the at least one processor, causes the apparatus to, based at least in part on the second capability, receive a fourth message from the second apparatus via a second primary channel associated with the non-primary channel access.

In at least one example embodiment, the instructions, when executed by the at least one processor, causes the apparatus to: determine a transmission bandwidth for the transmission of the fourth message via the second primary channel based at least in part on one or more criteria.

In at least one example embodiment, the instructions, when executed by the at least one processor, causes the apparatus to select the second primary channel from among a set of candidate primary channels, wherein the second message indicates the second primary channel.

In at least one example embodiment, the second primary channel is based at least in part on at least one of the following: a primary channel common to a set of apparatuses associated with the basic service set or a coordination scheme associated with the basic service set.

In at least one example embodiment, the instructions, when executed by the at least one processor, causes the apparatus to transmit a request to the second apparatus to communicate via one or more primary channels associated with the non-primary channel access.

In at least one example embodiment, the instructions, when executed by the at least one processor, causes the apparatus to receive third information indicating disablement of the first capability at the second apparatus; and receive a message over the first primary channel based at least in part on the disablement.

In at least one example embodiment, the first capability comprises a capability of the second apparatus to perform packet detection concurrently on the first primary channel and at least one channel associated with the non-primary channel access, and wherein the second capability comprises a capability of the apparatus to perform packet detection concurrently on the first primary channel and the at least one channel associated with the non-primary channel access.

In at least one example embodiment, a method is provided comprising transmitting a first message via a first primary channel associated with a basic service set, the first message comprising first information indicating a first capability of the apparatus to communicate via non-primary channel access; and receiving a second message from a second apparatus via the first primary channel in response to the first message, the second message comprising second information indicating a second capability of the second apparatus to communicate via the non-primary channel access.

In at least one example embodiment, a method is provided comprising receiving a first message via a first primary channel associated with a basic service set, the first message comprising first information indicating a first capability of an apparatus to communicate via non-primary channel access; and transmitting, a second message to the apparatus via the first primary channel in response to the first message, the second message comprising second information indicating a second capability of a first apparatus to communicate via the non-primary channel access.

In at least one example embodiment, a non-transitory computer readable storage medium is provided. The non-transitory computer readable storage medium comprises computer instructions that, when executed by an apparatus, cause the apparatus to transmit a first message via a first primary channel associated with a basic service set, the first message comprising first information indicating a first capability of the apparatus to communicate via non-primary channel access; and receive a second message from a second apparatus via the first primary channel in response to the first message, the second message comprising second information indicating a second capability of the second apparatus to communicate via the non-primary channel access.

In at least one example embodiment, a non-transitory computer readable storage medium is provided. The non-transitory computer readable storage medium comprises computer instructions that, when executed by an apparatus, cause the apparatus to receive a first message via a first primary channel associated with a basic service set, the first message comprising first information indicating a first capability of an apparatus to communicate via non-primary channel access; and transmit a second message to the apparatus via the first primary channel in response to the first message, the second message comprising second information indicating a second capability of a first apparatus to communicate via the non-primary channel access.

In at least one example embodiment, an apparatus is provided that comprises means for transmitting a first message via a first primary channel associated with a basic service set, the first message comprising first information indicating a first capability of the apparatus to communicate via non-primary channel access; and receiving a second message from a second apparatus via the first primary channel in response to the first message, the second message comprising second information indicating a second capability of the second apparatus to communicate via the non-primary channel access.

In at least one example embodiment, an apparatus is provided that comprises means for receiving a first message via a first primary channel associated with a basic service set, the first message comprising first information indicating a first capability of an apparatus to communicate via non-primary channel access; and transmitting, a second message to the apparatus via the first primary channel in response to the first message, the second message comprising second information indicating a second capability of a first apparatus to communicate via the non-primary channel access.

The above summary is provided merely for purposes of summarizing at least some example embodiments to provide a basic understanding of some aspects of the disclosure. Accordingly, it will be appreciated that the above-described embodiments are merely examples and should not be construed to narrow the scope of the disclosure in any way. It will also be appreciated that the scope of the disclosure encompasses many potential embodiments in addition to those summarized here, some of which will be further described below.

### BRIEF DESCRIPTION OF THE DRAWINGS

Having thus described certain example embodiments of the present disclosure in general terms, reference will hereinafter be made to the accompanying drawings, which are not necessarily drawn to scale, and wherein:
FIG. 1 illustrates an example communications network to which one or more examples disclosed herein may be applied;
FIG. 2A illustrates an example communications system to which one or more examples disclosed herein may be applied;
FIG. 2B illustrates an example timing diagram of a wideband transmission to which one or more examples disclosed herein may be applied;
FIGs. 3 through 6 illustrate example timing diagrams to which one or more examples disclosed herein may be applied;
FIG. 7 illustrates an example signaling diagram to which one or more examples disclosed herein may be applied;
FIG. 8 illustrates an example flowchart of a method to which one or more examples disclosed herein may be applied;
FIG. 9 illustrates an example flowchart of a method to which one or more examples disclosed herein may be applied;
FIG. 10 illustrates an example block diagram of an apparatus to which one or more examples disclosed herein may be applied.

### DETAILED DESCRIPTION

The following embodiments are exemplary. Although the specification may refer to "an", "one", or "some" embodiment(s) in several locations of the text, this does not necessarily mean that each reference is made to the same embodiment(s), or that a particular feature only applies to a single embodiment. Single features of different embodiments may also be combined to provide other embodiments. Further, when a particular feature, structure, or characteristic is described in connection of an embodiment, it is within the knowledge of one skilled in the art to apply such feature, structure, or characteristic in connection with other embodiments whether or not explicitly described. It shall be understood that although the terms "first," "second" and the like may be used herein to describe various elements, these elements should not be limited by these terms. These terms are only used to distinguish one element from another.

For the purposes of the present disclosure, the phrases "at least one of A or B", "at least one of A and B", and "A and/or B" means (A), (B), or (A and B). For the purposes of the present disclosure, the phrase "A, B, and/or C" means (A), (B), (C), (A and B), (A and C), (B and C), or (A, B, and C).

Embodiments described may be implemented in a communication network, such as any of the following radio access technologies (RATs): wireless fidelity (Wi-Fi), BLUETOOTH, Worldwide Interoperability for Micro-wave Access (WiMAX), Global System for Mobile communications (GSM, 2G), GSM EDGE radio access Network (GERAN), General Packet Radio Service (GRPS), Universal Mobile Telecommunication System (UMTS, 3G) based on basic wideband-code division multiple access (W-CDMA), high-speed packet access (HSPA), Long Term Evolution (LTE), LTE-Advanced, and enhanced LTE (eLTE), 5G (also called NR), or any future radio access technology (RAT) such as 6G. Moreover, communication within the communication network may utilize any suitable wireless communication technology, comprising but not limited to: Code Division Multiple Access (CDMA), Frequency Division Multiple Access (FDMA), Time Division Multiple Access (TDMA), Frequency Division Duplex (FDD), Time Division Duplex (TDD), Multiple-Input Multiple-Output (MIMO), Orthogonal Frequency Division Multiplexing (OFDM), and/or Discrete Fourier Transform spread OFDM (DFT-s-OFDM).

The term "terminal device" refers to any end device that may be capable of wireless communication. By way of example, a terminal device may be referred to as a communication device, user equipment (UE), a Subscriber Station (SS), a Mobile Station (MS). The terminal device may include a mobile phone, a cellular phone, a smart phone, voice over IP (VoIP) phones, wireless local loop phones, a tablet, a wearable terminal device, a personal digital assistant (PDA), portable computers, desktop computers, image capture terminal devices such as digital cameras, gaming terminal devices, music storage and playback appliances, vehicle-mounted wireless terminal devices, universal serial bus (USB) USB dongles, an Internet of Things (IoT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like.

A term "resource", as used herein, may refer to radio resources in time domain, in frequency domain, in space domain, and/or in code domain. Some examples of resources include e.g. a physical resource block (PRB), a radio frame, a subframe, a time slot, a subband, a frequency region, a sub-carrier, a beam, etc. The term "transmission" and/or "reception" may refer to wirelessly transmitting and/or receiving via a wireless propagation channel on radio resources.

In some examples, a communications system may be deployed in a wireless local area network (WLAN), such as a Wi-Fi network. That is, in some examples, a communications system may be an example of a WLAN system. The WLAN system may support wireless communications between one or more communications devices in accordance with one or more Wi-Fi protocols, such as protocols based on institute of electrical and electronics engineers (IEEE) 802.11 standards and/or related drafts, such as 802.11-2020, 802.11ac, 802.11ax, 802.11be, 802.11bn, and/or others.

In some examples, Wi-Fi communications may occur via one or more radio frequency bands, such as 2.4 gigahertz (GHz), 3.6 GHz, 5 GHz, 6 GHz, 60 GHz, and/or the like. In some such examples, each radio frequency band may support one or more channels (e.g., 20 megahertz (MHz) channels) over which data may be communicated. In some examples, multiple devices may use multiple channels to communicate over the WLAN simultaneously.

A WLAN system may include one or more communications devices, such as an access points (APs) and/or a station (STA), which is also referred to herein as a non-AP STA. For example, a device configured to support one or more Wi-Fi protocols may be an example of an AP (e.g., may operate in accordance with an AP mode) and/or may be an example of a non-AP STA (e.g., may operate in accordance with a non-AP STA mode). In some examples, an AP may control Wi-Fi communications for one or more non-AP STAs. For example, an AP may be (or may be connected to) a central entity used to establish (and/or control) one or more connections between one or more non-AP STAs and another network (e.g., the Internet). In other words, in some examples, the AP may connect a wired network (e.g., the Internet) to a wireless network (e.g., the WLAN). In some instances, a Wi-Fi network may be identified via one or more identifiers, such as a service set identifier (SSID) or a basic service set identifier (BSSID).

In some examples, an AP of a WLAN system includes at least one distribution system access function configured to facilitate data communication beyond the AP. Additionally, or alternatively, non-AP STAs may be configured to be end devices, which rely on association with an AP to communicate with devices other than the AP. An AP may be configured to connect to a wired local area network (LAN) (e.g., via Ethernet). The AP may allow one or more client devices (e.g., non-AP STAs) to access wireless connections via WLAN. The client devices may also be referred to as "WLAN clients". WLAN clients may comprise various devices and/or types of devices, including laptops, tablets, cell phones, and/or other devices.

A WLAN system may support one or more architectures (types of logical relationships between devices). For example, a WLAN system may support an autonomous architecture, a centralized architecture, a cooperative architecture, and/or other types of architectures. In some examples of an autonomous architecture, APs are stand-alone APs configured with features and capabilities to operate without any reliance on another device. In some examples of a centralized architecture, a centralized network manager may regulate the operation of the WLAN. In other words, the network manager may be the AP or may be connected to one or more APs within the WLAN. For example, APs may be connected (e.g., wirelessly and/or via a wired connection) to a central entity, which may be configured to act as a network manager. In some examples, the network manager is a cloud-based entity, which may reside either in a private cloud or in a public cloud. In some examples of a cooperative architecture (also referred to as a network manager-less or controller-less architecture), a virtual management (e.g., cloud-based) system may be used to control a WLAN. For example, the virtual management system may employ a cooperative communication method between one or more APs to control the WLAN. In other examples, a centralized network manager may use a wireless system to provide local connection to clients (e.g., STAs). For example, the centralized network manager may be a controller configured to perform operations related to authentication, authorization, accounting (e.g., via an authentication, authorizing, and accounting (AAA) server), and/or other operations.

Additionally, or alternatively, a WLAN system may support one or more topologies (types of physical connections between various devices within the WLAN system). For example, the WLAN system may support an infrastructure topology which may include a combination of wired and wireless connections. In some examples of an infrastructure topology, the infrastructure topology may include one or more wired devices with a wired connection to a network (e.g., one or more APs that are each connected via a cable to a switch) and the one or more wired devices may support one or more wireless connections to one or more wireless devices (e.g., laptops, tablets, cell phones), such that the wireless devices may connect wirelessly to the network. In other words, the one or more wired devices may serve as a bridge between the wireless network and the wired network. Additionally, or alternatively, the WLAN system may support an ad hoc topology, which does not rely on infrastructure (e.g., cables, routers, servers, or APs). In some examples of an ad hoc network, one or more non-AP STAs (also referred to as clients or client devices) may wirelessly connect to other devices in a peer-to-peer network. Additionally, or alternatively, the WLAN system may support a mesh topology in which multiple network devices are interconnected with each other via wireless connections. For example, in accordance with a mesh topology, an AP (e.g., each AP), which may support one or more wireless connections with one or more STAs (e.g., one or more APs and/or one or more non-AP STAs), may communicate wirelessly with one or more other APs.

In accordance with one or more Wi-Fi protocols, data may be transmitted wirelessly between two devices (e.g., an AP and a non-AP STA) via packets, referred to as protocol data units (PDUs). In other words, Wi-Fi communications may include transmission and reception of one or more PDUs. For example, data may be communicated via a frame (e.g., a medium access control (MAC) frame), which may include one or more PDUs. In some instances, multiple frames may include the same PDU. In some examples, a PDU may include data (referred to as a payload), as well as one or more headers (e.g., a sequence of one or more fields) and/or one or more trailers (e.g., a sequence of bits appended to the PDU, after the payload). In some examples, the data included in the PDU, may be user data, control data, management data, and/or other types of data. In some examples, frames may include data type frames, control type frames, management type frames, and/or other types of frames. At least one frame type (e.g., each frame type) may be included in a PDU, wherein a payload of a PDU may comprise user data, control data, management data, and/or other data. In some examples, a WLAN system may implement one or more security protocols to protect the confidentiality, integrity, and availability of Wi-Fi communications.

In some examples, a WLAN system may support transmission opportunities (TXOPs) to increase throughput, such as for high priority data, by providing contention-free channel access for a period of time. A TXOP may be available in a quality of service (QoS) mode as part of Enhanced Distributed Channel Access (EDCA), and/or may be a limited time period of contention-free channel access available to the channel-owning station (e.g., the TXOP holder). During such a period a TXOP holder, which may be a non-AP STA or an AP, may send multiple frames that satisfy criteria, which may have been determined for the use of TXOP. In some examples, the criteria may allow transmission of frames belonging to an access category (AC) other than the AC for which the TXOP has been obtained. In some examples, a TXOP may increase throughput and/or reduce delay of QoS data frames by eliminating contention periods between transmissions. In some examples, a TXOP may be used in combination with frame aggregation and block acknowledgement to further increase throughput.

In some examples, access categories have different channel access parameters, such as Arbitration Interframe Spacing (AIFS), duration, contention window size, and TXOP limit. In some examples, values of these parameters may be set in a manner that increases a likelihood of higher priority packets being prioritized over lower priority packets. For example, the values of the parameters may be set that a non-AP STA (typically) waits for a shorter duration before sending the higher priority packets compared to a duration that the non-AP STA may wait before sending the lower priority packets. Additionally, or alternatively, the values of the parameters may be set so that the contention window for higher priority packets is smaller than that of lower priority packets and/or so that multiple packets may be sent in a TXOP. In some examples, a TXOP holder, which may be either a non-AP STA or an AP, may send frames to multiple recipients during a TXOP. In addition to QoS data frames, other frames may be exchanged during the TXOP, such as an acknowledgement (ACK), BlockAckReq/BlockAck frames, and/or other control and management frames.

In some examples, a WLAN system uses multi-link operation (MLO) to improve data transmission (e.g., via using multiple frequency bands for transmissions). In some examples, MLO further comprises various features, including simultaneous transmit and receive (STR), multi-channel multi-radio (MCMR), enhanced multi-AP roaming (E-MAR), non-simultaneous transmit and receive (NSTR), multi-link multi-radio (MLMR), and/or other features.

An AP that supports MLO may be referred to as an AP multi-link device (MLD). An MLO-capable client, for example, such as a non-AP STA, may be referred to as a non-AP MLD. Such a client device may have two or more non-AP STAs with which it may establish links to an AP MLD. A connection between a non-AP STA and AP may represent a link between an AP MLD and a non-AP MLD. In some examples, APs which do not support MLO may be multi-band APs which have two or more APs operating in different bands and/or channels. An AP may operate in one or more bands and/or channels and a client device may connect to the AP via one or more of the bands and/or channels. For example, a client device may associate with the AP in one of the channels. An AP MLD may operate as a multi-band AP, while providing means for a multi-link capable client (non-AP MLD) to simultaneously use two or more of its radios and/or APs for communication with a single association. An AP MLD may be an MLMR, which is configured to communicate simultaneously with its APs with associated non-AP MLDs. Non-AP MLDs may have constraints (e.g., NSTR), which may indicate that simultaneous communication over established links is not possible. Therefore, in some such instances, a non-AP MLD may associate to an AP MLD. Accordingly, the non-AP MLD may be associated over two or more bands and/or channels and may communicate with the APs affiliated to the AP MLD over the established links.

WLAN devices configured with STR may be configured to allow simultaneous transmission and/or reception via different respective frequency bands, which may reduce latency. WLAN devices configured with MCMR may be configured to allow data transmission via two or more radios and/or channels, which may increase efficiency, reduce congestion, and/or increase network speeds. WLAN devices configured with EMLSR may be configured to allow client devices to switch between multiple respective APs while maintaining their connections, which may allow more consistent connectivity. WLAN devices configured with NSTR may be configured to allow client devices to non-simultaneous transmission and/or reception via different respective frequency bands, which may reduce latency (particularly in comparison with single-link operation). WLAN devices configured with MLMR may be configured to allow different respective radios and/or channels to be used for managing respective links, which may reduce interference and/or improve network performance.

A WLAN system may be configured with various types of services sets, for example, such as basic service set (BSS) and/or an extended service set (ESS). A BSS may be comprised of an AP and one or more client devices (e.g., non-AP STAs) associated with the AP. The one or more client devices may have one or more common physical layer (PHY) medium access characteristics (e.g., radio frequency, modulation scheme, security settings, and/or the like). A BSSID may define the BSS such that the one or more client devices of the BSS share the same BSSID.

In some examples, two or more BSSs may have overlapping coverage areas, and they may operate with either partially or entirely same radio frequency channels. In such examples of overlapping BSSs (OBSSs), a client device may transmit frames from the area of overlap, and one or more other client devices may sense the transmission. Responsive to sensing the transmission, the one or more other client devices may cease their own transmissions. In some examples, if the other client devices do not sense the transmission, the other client devices may become hidden terminals with respect to the client device which is transmitting.

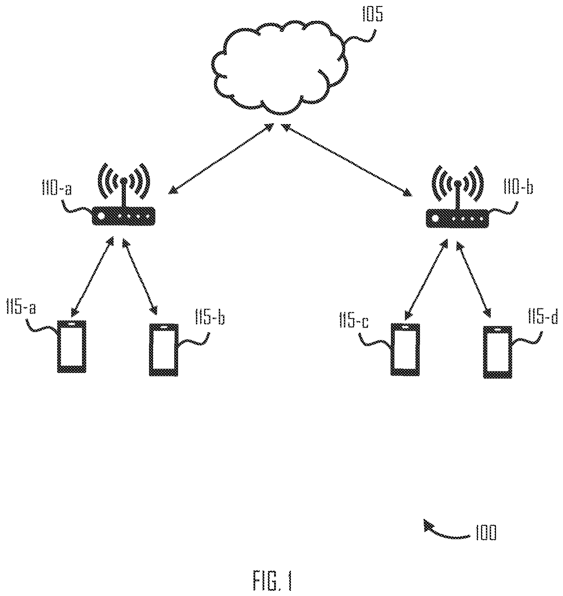

FIG. 1 illustrates an example communications system 100 to which one or more examples disclosed herein may be applied. The communications system 100 may include a cloud network 105, one or more APs (e.g., an AP 110-a, an AP 110-b), and one or more client devices, also referred to herein as non-AP STAs, connected to the one or more APs. For example, the communications system 100 may include a non-AP STA 115-a and a non-AP STA 115-b connected to the AP 110-a, as well as a non-AP STA 115-c and a non-AP STA 115-d connected to the AP 110-b. In some examples, the APs 110 may be mobile access points (mAPs) with constrained functionality. In some such examples, a configuration comprising an mAP and a non-AP STA may be implemented as part of a peer-to-peer connection, for example, as in Wi-Fi Direct or Wi-Fi Aware. In some examples, a device may simultaneously operate as a non-AP STA and as an AP. One such an example case is in a multi-AP network, which includes two or more devices that may act as APs and use Wi-Fi for the wireless backhaul connectivity based on a non-AP STA-AP connection model.

In some wireless communications systems, APs may provide wireless connectivity for one or more non-AP STAs according to the Wi-Fi standards, such as those that are a subset of the IEEE 802 family of standards. For example, the MAC and PHY specifications for Wi-Fi access points are defined by IEEE 802.11 for transmitting and receiving data in frequency bands such as 2.4 GHz, 3.6 GHz, 5 GHz, 6 GHz, 60 GHz, and/or the like. APs and non-AP STAs may communicate through the transmission of frames, including data frames, management frames, and/or control frames, which may be transmitted in unicast messages, broadcast messages, or multicast messages. The 802.11 standards define an inter-frame space (IFS) as the nominal time (in microseconds (µs)) that the MAC and PHY use to receive the last symbol of a frame, process the frame, and respond with the first symbol of a response frame (e.g., the earliest possible response frame).

In the example of FIG. 1, the non-AP STAs 115 may be configured to be in a wireless connection with at least one Wi-Fi AP (e.g., the APs 110). Functionalities of the at least one Wi-Fi AP may be implemented by various entities and/or types of entities, for example, such as APs, mAPs, access nodes, nodes, hosts, servers, base stations, and/or other entities suitable for such usage. Functionalities of the at least one client device may be implemented by various entities and/or types of entities, for example, such as clients-side user devices, non-AP STAs, UEs, and/or other entities suitable for such usage. For example, the communications system 100 may support radio frequency sensing during IFS.

The communications system 100 may support latency-sensitive applications at Wi-Fi devices (e.g., APs, non-AP STAs). Some such applications may include for example virtual reality applications, mixed reality applications, and augmented reality (XR) applications. In some cases, reliability and non-deterministic channel access, such as for wideband transmissions, may constrain a performance of latency-sensitive applications. For example, for a wideband transmission (or channel bonding), a devices may use a primary 20 MHz channel to communicate control frames and management frames and may communicate data frames by bonding a BSS primary channel with one or more other available 20 MHz channels, which are referred to as secondary channels. Channel bonding was introduced to provide for transmissions over multiple contiguous 20 MHz channels. In some instances, channel bonding may support transmissions over a total bandwidth of 40 MHz, 80 MHz, 160 MHz, or 320 MHz.

In some examples, if the device assesses the BSS primary channel to be idle, the device may perform the wideband transmission across a bandwidth including the BSS primary channel or the BSS primary channel and one or multiple contiguous secondary channels (e.g., totaling 40 MHz, 80MHz, or 160 MHz or 320MHz). In some instances, however, an overlapping basic service set (OBSS) transmission may overlap (partially or fully) with the BSS primary channel. In some such instances, the device may determine that the BSS primary channel is busy and, as such, may defer the wideband transmission. Consequently, the secondary channels may sit idle until the BSS primary channel is available, which may lead to reduced performance, for example, for latency-sensitive applications.

Various aspects of the present disclosure provide a framework for concurrent reception for non-primary channel access (NPCA). For example, the framework may provide for an AP (e.g., the AP 110-a, the AP 110-b) to enable or disable NPCA and related information exchange between NPCA-capable devices. Additionally, in some examples, the framework may provide for selection of NPCA primary channel either by the AP alone or through negotiations with associated non-AP STAs (e.g., one or more of the non-AP STAs 115). Additionally, in some examples, the framework may provide for switching to the NPCA primary channel based on one or more triggers detected, for example, on either the BSS primary channel or the NPCA primary channel, which may be enabled by monitoring and/or decoding transmissions on both the BSS primary channel and the NPCA primary channel simultaneously.

For example, in accordance with the framework, the AP 110-a may transmit a first message to the non-AP STA 115-a (or the non-AP STA 115-b) via a first primary channel associated with a BSS including the AP 110-a and the non-AP STAs 115. The first message may include first information indicating a first capability of the apparatus to communicate via NPCA. In response to the first message, the non-AP STA 115-a (or the non-AP STA 115-b) may transmit a second message to the AP 110-a via the first primary channel. The second message may include second information indicating a second capability of the second apparatus to communicate via the NPCA. In some examples, by exchanging NPCA capability information (e.g., via the first message and the second message), the AP 110-a and the non-AP STA 115-a (or the non-AP STA 115-b) may coordinate NPCA communications, which may improve resource utilization and reduce latency, which may lead to improved performance for latency-sensitive applications.

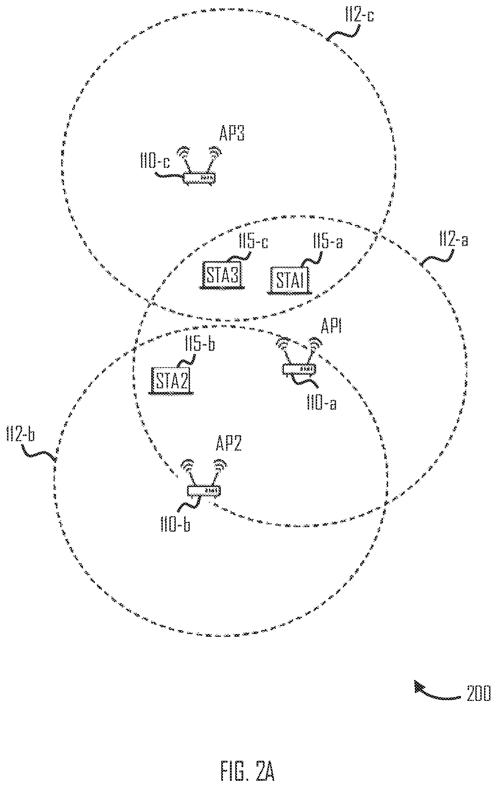

FIG. 2A illustrates an example communications system 200 to which one or more examples disclosed herein may be applied. The communications system 200 may be an example of a communications system illustrated by and described with reference to FIG. 1. For example, the communications system 200 may include one or more APs, and one or more client devices (e.g., non-AP STAs) connected to the one or more APs. As illustrated in the example of FIG. 2A, the communications system 200 may include an AP 110-a (denoted AP1) providing a coverage area 112-a, an AP 110-b (denoted AP2) providing a coverage area 112-b, and an AP 110-c (denoted AP3) providing a coverage area 112-c. The APs 110 (e.g., each AP 110) may be an example of an AP illustrated by and described with reference to FIG. 1. The communications system 200 may also include a non-AP STA 115-a (denoted STA1), a non-AP STA 115-b (denoted STA2), and a non-AP STA 115-c (denoted STA3). The non-AP STAs 115 may be examples (e.g., may each be an example) of a non-AP STA illustrated by and described with reference to FIG. 1.

The communications system 200 may support latency-sensitive applications at Wi-Fi STAs. Some such applications include VR applications, MR applications, XR applications. In some cases, reliability and non-deterministic channel access, such as for wideband transmissions, may constrain a performance of latency-sensitive applications.

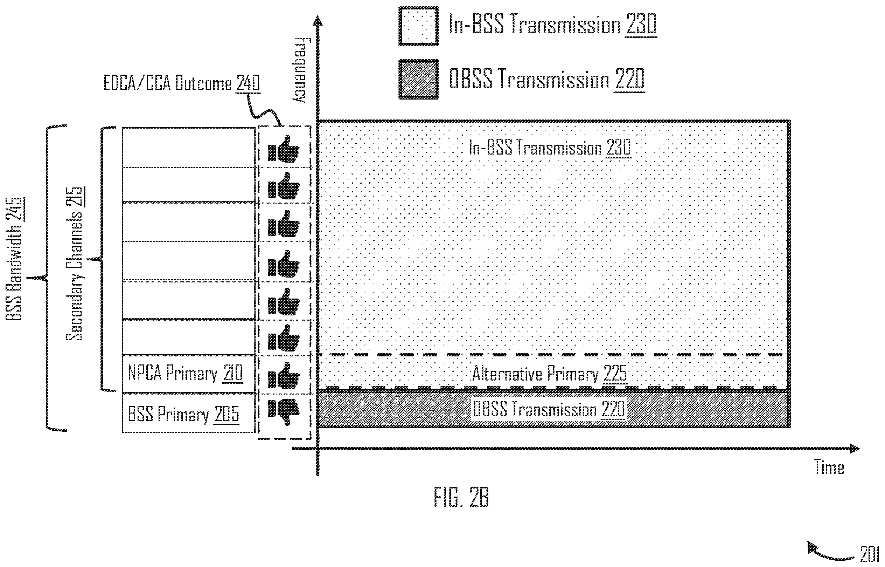

FIG. 2B illustrates an example timing diagram 201 of a wideband transmission to which one or more examples disclosed herein may be applied. For example, AP1 and STA1 illustrated in the example of FIG. 2A, may be associated with a BSS having a BSS bandwidth 245 (also referred to as reference bandwidth). The BSS bandwidth 245 may include multiple channels (e.g., multiple 20 MHz channels). To perform a wideband transmission using some (or all) of the BSS bandwidth 245, STA1 may perform a listen-before-talk (LBT) procedure (e.g., an EDCA or clear channel access (CCA) procedure) on one or more of the multiple channels (e.g., each 20 MHz channel). In some instances, one of the channels may be selected as a BSS primary channel, which is used by AP1 and STA1 as the reference channel to communicate control frames (e.g., critical control frames) and management frames between STA1 and AP1. As illustrated in the example of FIG 2B, a first 20 MHz channel (BSS primary channel 205) may be selected as the BSS primary channel. In some such examples, STA1 may transmit data frames across multiple channels (e.g., the entire bandwidth) by bonding the BSS primary channel 205 with one or more other available secondary channels 215. In some examples, however, for STA1 to acquire a TXOP and perform a wideband transmission, STA1 may first gain access to the BSS primary channel 205 (e.g., via an EDCA procedure). That is, if STA1 fails to capture the BSS primary channel 205, STA 1 may refrain from performing the wideband transmission irrespective of whether one or more secondary channels 215 are idle. In some instances, STA1 may gain access to a channel (e.g., the BSS primary channel 205 and/or one or more of the secondary channels 215) via a point coordination function (PCF) interframe space (PIFS) CCA procedure. In other words, STA1 may perform an EDCA and/or CCA procedure to gain access to one or more channels of the BSS bandwidth for an In-BSS transmission. For example, if an EDCA/CCA outcome 240 for a channel is positive (illustrated with a thumbs-up icon), STA1 may determine that the channel is available (e.g., idle). Additionally, if an EDCA/CCA outcome 240 for a channel is negative (illustrated with a thumbs-down icon), STA1 may determine that the channel is unavailable (e.g., busy).

In some examples, a device (e.g., STA1 or AP1) may determine to transmit a wideband transmission across a transmission bandwidth of 20 MHz, 40 MHz, 80 MHz, 160 and 320 MHz, formed from one or multiple contiguous 20 MHz channels. In some such instances, the device may assess the BSS primary channel to be idle and, as such, may transmit the wideband transmission using one 20 MHz channel (e.g., the BSS primary channel) or multiple contiguous 20 MHz channels (e.g., the BSS primary channel plus one or more secondary channels having a total bandwidth of 40 MHz, 80MHz, 160, or 320 MHz). In some other instances, however, the device may determine that an OBSS transmission overlaps (partially or fully) with the wideband transmission (e.g., a reference wideband transmission). For example, the device may determine that the one or more secondary channels are idle, but the BSS primary channel is busy due to the OBSS transmission. In such an example, the device may refrain from transmitting the wideband transmission and, as such, the one or more secondary channels may sit idle (e.g., go unused).

For example, during a first transmission period, the device may determine that there is no OBSS transmission and, as such, the device may transmit the In-BSS transmission over the entire 160 MHz band. In some examples, during a second transmission period, the device may determine that there is an OBSS transmission in the last 20 MHz of the 160 MHz band. In some such examples, transmissions may be constrained to a contiguous 20 MHz, 40 MHz, 80 MHz, or 160 MHz bands. Consequently, based on the OBSS transmission using part of the 160 MHz band (e.g., the last 20 MHz of the 160 MHz band), the In-BSS transmission may be constrained to the first contiguous 80 MHz. Thus, 60 MHz of available spectrum may go unused. In some examples, during a third transmission period, the device may determine that there is an OBSS transmission in the first 20 MHz of the 160 MHz band, which collides with the BSS primary channel. In some such examples, the device may fail to gain access to the BSS primary channel and, as such, may refrain from transmitting the In-BSS transmission and 140 MHz of available spectrum may go unused.

In some cases, to improve resource utilization and reduce a likelihood of unused channels, a device (e.g., an AP or non-AP STA) may use preamble puncturing to create bandwidth out of one or more idle channels (e.g., any CCA clear channels). That is, in some cases, the device may use preamble puncturing to transmit a wideband transmission across non-contiguous 20MHz channels. In some such cases, however, the wideband transmission may depend on the device first gaining access to the BSS primary channel (e.g., via EDCA). Given the increasing amount of spectrum available for Wi-Fi transmissions, necessitating that the device first gain access to the BSS primary channel may lead to relatively large unused portions of the spectrum. In other words, necessitating that the device first gain access to the BSS primary channel may cause a bottleneck in terms of system performance and spectrum utilization.

For example, a device (e.g., AP1 and STA1) in a BSS may be configured with a BSS bandwidth, which may include a BSS primary channel and one or more secondary channels. In some examples, an OBSS transmission (e.g., 20 MHz OBSS transmission) from a neighboring AP and/or non-AP STA (or any other device utilizing the same frequency carrier) may overlap with the BSS bandwidth. In other words, the 20 MHz OBSS transmission may overlap with a reference 160 MHz In-BSS transmission (e.g., a transmission from a reference AP and/or a non-AP STA included in the BSS). In some examples, the OBSS transmission may overlap with a secondary channel, such that the device may gain access to the BSS primary channel. Accordingly, the device may use puncturing to remove the secondary channel used by the OBSS transmission from the BSS bandwidth and may proceed to transmit the In-BSS transmission over a reduced, non-contiguous bandwidth (e.g., including the BSS primary channel). In some other examples, an OBSS transmission may overlap with the BSS primary channel. In some such examples, the device may determine to defer the In-BSS transmission due to the BSS primary channel being busy. Consequently, due to the device deferring the In-BSS transmission, the secondary channels (e.g., all but the first 20 MHz of the BSS bandwidth used by the OBSS transmission) may sit idle until the BSS primary channel becomes available. Thus, necessitating that the device first gain access to the BSS primary channel may lead to increased latency, reduced system performance, and reduced spectrum utilization.

For example, during a first transmission period, the device may determine that there is no OBSS transmission. In such an example, the device may determine to transmit the In-BSS transmits over the entire 160 MHz bandwidth. In some other examples, during a second transmission period, the device may determine that there is an OBSS transmission in the last 20 MHz of the 160 MHz bandwidth. In some such examples, the device may use preamble puncturing to transmit the In-BSS transmission over the first 140 MHz, leaving the last 20 MHz to the OBSS transmission. In such examples, no portion of the spectrum goes unused. In some examples, however, during a third transmission period, the device may determine that there is an OBSS transmission in the first 20 MHz of the 160 MHz band, which collides with the primary channel of the BSS (e.g., the BSS primary channel). Thus, in such examples, the device may determine to defer the In-BSS transmission due to the BSS primary channel being busy. Consequently, due to the device deferring the In-BSS transmission, the remaining 140 MHz of available spectrum may go unused. In other words, all but the first 20 MHz of the BSS bandwidth used by the OBSS transmission may sit idle until the BSS primary channel becomes available. Thus, necessitating that the device first gain access to the BSS primary channel may lead to increased latency, reduced system performance, and reduced spectrum utilization.

Constraints caused from necessitating the device first gain access to the BSS primary channel, may increase a complexity associated with provisioning resource and assigning neighboring BSSs non-overlapping primary channels in Wi-Fi deployments. Additionally, in some instances, such constraints may preclude a device from having relatively high bandwidth support (as relatively high bandwidths may have an increased likelihood of overlapping a neighboring primary channel). Such constraints may therefore result is an inefficient use of the available spectrum resources and an ineffective system throughput. Constraints caused from necessitating the device first gain access to the BSS primary channel, may be exacerbated by increases in an operating bandwidth (e.g., a maximum operating bandwidth) with subsequent Wi-Fi generations.

To increase spectrum utilization, a device (e.g., STA1, AP1) may be configured to support NPCA. For example, NPCA may enable the device to utilize an idle secondary channel as an alternative primary channel (referred to herein as an NPCA primary channel) for instances in which the BSS primary channel is occupied due to OBSS traffic or is otherwise unavailable. As illustrated in the example of FIG. 2B, an OBSS transmission 220 may occupy the BSS primary channel 205 and, as such, the device may use an NPCA primary channel 210 (e.g., an idle secondary channel 215) as an alternative primary channel 225 for an In-BSS transmission 230. For example, the device may access a secondary channel when the BSS primary channel is known to be busy due to OBSS traffic or other conditions and determine that the secondary channel is idle and may be used as the alternative primary channel 225. The device may (or may not) be capable of detecting or decoding a frame to obtain network allocation vector (NAV) information on secondary channels concurrently with the BSS primary channel.

In some examples, a BSS may be associated with a single (pre-assigned) NPCA primary channel on which the device operates while the primary channel of the BSS is known to be busy due to OBSS traffic or other conditions. For example, the device may be constrained to wait for a trigger frame before the device sends a PPDU. In some examples, a device (e.g., AP or non-AP STA) may detect the presence of an OBSS transmission on the BSS primary channel. In some such examples, the device may switch from the BSS primary channel to the pre-assigned NPCA primary channel based on some (pre-defined) criteria. That is, in some examples, both AP and non-AP STAs may switch to the NPCA primary channel when the BSS primary channel is determined to be busy due to OBSS traffic or other conditions. In some such examples, however, the AP and non-AP STA may lack a mechanism for coordinating a switch to the NPCA primary channel. For example, the AP and non-AP STA may have different understandings regarding whether the BSS primary channel is busy. In such examples, one of the AP and non-AP STA may switch to the NPCA primary channel, while the other may not, causing an interruption in communication between the AP and non-AP STA and a loss of connectivity.

In the example of FIG. 2A, STA1 and STA3 may be associated with (e.g., belong to) a first BSS (BSS1) including AP1. Additionally, in the example of FIG. 2A, and STA2 may be associated with a second BSS (BSS2). In some examples, STA2 may transmit the OBSS transmission 220 on the BSS primary channel for BSS1. In some such examples, AP1 and STA1 may detect the OBSS transmission 220 and switch to the NPCA primary channel 210. However, the OBSS transmission 220 may be hidden from STA3 (e.g., STA3 may be unable to detect the OBSS transmission 220) and, as such, STA3 may remain on the BSS primary channel 205. In some examples, by remaining on the BSS primary channel 205, STA3 may fail to detect a request to send (RTS) transmission such as multi-user RTS (MU-RTS) transmissions from AP1 on the NPCA primary channel 210. Consequently, STA3 may fail to return a clear to send (CTS) transmission. A failure of STA3 to return the CTS transmission may prohibit STA3 from establishing communication with AP1 and, as such, STA3 may fail to receive data.

Various aspects of the present disclosure provide a framework for an AP to trigger an NPCA-capable non-AP STA to switch to an NPCA primary channel irrespective of whether the non-AP STA detects an OBSS transmission over an assigned BSS primary channel. In other words, various aspects of the present disclosure provide a mechanism for triggering an NPCA-capable non-AP STA to move to the NPCA primary channel if/when an associated AP switches to the NPCA primary channel, for example, even when the NPCA-capable non-AP STA fails to detect the assigned primary channel as unavailable (e.g., busy).

In some examples, in accordance with one or more aspects of the present disclosure, AP1 may transmit a first message to STA3 via the BSS primary channel 205 associated with BSS1. The first message may include first information indicating a first capability of the AP1 to communicate via NPCA (e.g., using the NPCA primary channel 210). In response to the first message, STA3 may transmit a second message to AP1 via the BSS primary channel 205. The second message may include second information indicating a second capability of STA3 to communicate via the NPCA (e.g., using the NPCA primary channel 210). In some examples, by exchanging NPCA capability information (e.g., via the first message and the second message), AP1 and STA3 may coordinate NPCA communications, which may improve resource utilization, reduce latency, and provide improved performance for latency-sensitive applications.

For example, in accordance with various aspects of the present disclosure, AP1 may activate or deactivate NPCA in BSS1 for uplink and/or downlink. In some examples, AP1 may activate or deactivate NPCA via an information field in a beacon or in negotiations with one or more associated non-AP STAs (e.g., STA1, STA3) or by sending an action or management frame.

In some examples, in accordance with various aspects of the present disclosure, a non-AP STA may signal (to AP1) a capability of the non-AP STA to transmit and/or receive on an NPCA primary channel for the purposes of control and data transmission when the BSS primary channel is busy. In some such examples, the non-AP STA may propose one or more secondary channels (e.g., which secondary channel(s)) the non-AP STA may use as the NPCA primary channel. In such examples, the non-AP STA may be able to listen to the BSS primary channel and the one or more proposed NPCA primary channels simultaneously.

In some examples, based on information obtained from one or more associated non-AP STAs regarding secondary channels the one or more non-AP STAs may use for control and data transmission (e.g., as the NPCA primary channels) when the BSS primary channel is busy, the AP may assign an NPCA primary channel to the one or more associated non-AP STAs.

In some examples, the AP may transmit on the assigned NPCA primary channel to associated non-AP STAs that have signaled a capability to transmit and/or receive control and data transmission on that secondary channel.

In some examples, when NPCA is active in a BSS, an NPCA-capable device (e.g., AP or non-AP STA) may perform physical carrier sensing and packet detection on both the BSS primary channel and NPCA primary channel simultaneously.

The assigned NPCA primary channel (e.g., the NPCA primary channel selected by the AP) may be within or outside of the current operating bandwidth of the BSS. For example, a BSS may be associated with a 160 MHz band, and an AP may operate the BSS on 80MHz. In such an example, the AP may assign the BSS an NPCA primary channel that is within the band 160 MHz band and outside of the current 80 MHz operating bandwidth.

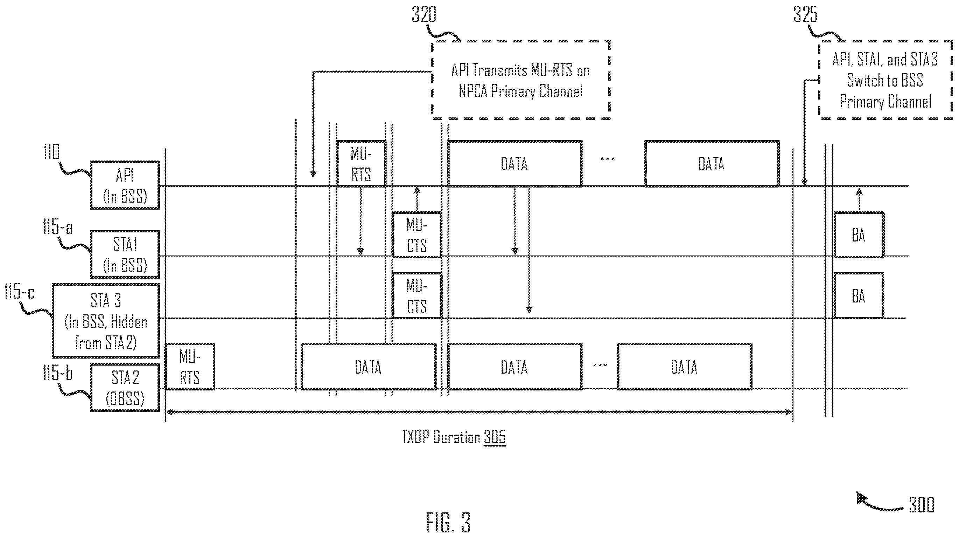

FIG. 3 illustrates an example timing diagram 300 to which one or more examples disclosed herein may be applied. The timing diagram 300 includes operations (e.g., signaling) performed at an AP 110 (denoted AP1), a non-AP STA 115-a (denoted STA1), a non-AP STA 115-b (denoted STA2), and a non-AP STA 115-c (denoted STA3). The AP 110 and the non-AP STAs 115 may be examples of the corresponding devices illustrated by and described with reference to FIGs. 1, 2A, and 2B. In the example of FIG. 3, AP1, STA1, and STA3 are associated with a BSS and STA 2 is associated with an OBSS. As illustrated in the example of FIG. 3, STA3 is hidden from STA2 (and thus unable to detect transmission from STA2). For example, STA3 may be unable to detect an OBSS transmission from STA2 on a BSS primary channel associated with the BSS during a TXOP duration 305. AP1 and STA3 may be configured to employ one or more aspects of the present disclosure to coordinate NPCA communication between AP1 and STA3 irrespective of whether STA3 may detect OBSS transmissions on the BSS primary channel.

For example, in accordance with one or more aspects of the present disclosure, AP1 may transmit one or more message to STA3 (and STA1) to activate or deactivate NPCA in the BSS uplink and/or downlink. In some examples, AP1 may activate or deactivate NPCA for uplink and/or downlink communication within the BSS (e.g., between the AP1 and STA1 and/or between AP1 and STA3) via an information field in a beacon frame or in another broadcast frame or in one or more other types of frames transmitted during negotiations between AP1 and STA1 and/or between AP1 and STA3.

In some examples, in accordance with one or more aspects of the present disclosure, AP1 may signal (to STA1 and/or STA3) a capability of AP1 to transmit and/or receive on an NPCA primary channel, for example, for control and data transmission when the BSS primary channel is unavailable. In some examples, AP1 may propose one or more secondary channels that AP1 and STA1 and/or STA3 may use as the NPCA primary channel. That is, in some examples, AP1 may indicate one or more candidate NPCA primary channels to associated non-AP STAs.

In some examples, AP1 may transmit a first NPCA capability indication to STA3. The first NPCA capability indication may indicate a capability of AP1 to support NPCA (e.g., to transmit and/or receive on an NPCA primary channel). In some examples, the first NPCA capability indication may indicate that AP1 is capable of listening to (e.g., performing channel sensing and packet detection on) both the BSS primary channel and one or more NPCA primary channels simultaneously.

Additionally, or alternatively, STA3 may signal (to AP1) a capability of STA3 to transmit and/or receive on an NPCA primary channel, for example, for control and data transmission when the BSS primary channel is unavailable. In some examples, STA3 may propose one or more secondary channels that STA3 may use as the NPCA primary channel.

Additionally, or alternatively, STA3 may transmit a second NPCA capability indication to AP1. The second NPCA capability indication may indicate a capability of STA3 to transmit and/or receive on an NPCA primary channel. For example, the second NPCA capability indication may indicate that STA3 is capable of listening to (e.g., performing channel sensing and packet detection on) both the BSS primary channel and one or more NPCA primary channels simultaneously.

In some examples, based on the second NPCA capability indication, AP1 may assign STA3 an NPCA primary channel. In other words, based on information gathered from one or more associated non-AP STAs (e.g., from STA3 and/or STA1) regarding which secondary channels the associated non-AP STAs may use for the purpose of control and data transmission when the BSS primary channel is busy, AP1 may select a secondary channel to assign as an NPCA primary channel for the associated non-AP STAs.

In some examples, STA 3 may be configured to monitor both the BSS primary channel and the NPCA primary channel and, upon detection of an MU-RTS transmission on the NPCA primary channel, may switch to the NPCA primary channel despite not sensing that the BSS primary channel is busy.

For example, at 320, and based on the second NPCA capability, AP1 may transmit an MU-RTS on the (assigned) NPCA primary channel to STA3. That is, AP1 may select a secondary channel to assign as the NPCA primary channel and may transmit on the NPCA primary channel to associated non-AP STAs that have signaled a capability to transmit and/or receive control and data transmission on the selected secondary channel.

In some examples, based on NPCA being active in the BSS, the NPCA-capable STAs (e.g., AP1 and STA3) may perform physical carrier sensing (and packet detection) on both the BSS primary channel and the NPCA primary channel simultaneously. Accordingly, STA3 may detect the MU-RTS transmission from AP1 (at 320) and may transmit an MU-CTS to AP1 in response to the MU-RTS.

In some examples, in response to detecting the MU-RTS transmission on the NPCA primary channel, STA3 may switch to the NPCA primary channel (e.g., despite not sensing that the BSS primary channel is unavailable). For example, STA3 and STA1 may detect the MU-RTS from AP1 on the NPCA primary channel. In such an example, based on AP1 activating NPCA communication (e.g., between AP1 and STA3 and between AP1 and STA1), STA1 and STA3 may switch to the NPCA primary channel. In other words, STA 3 may monitor both the BSS primary channel and the NPCA primary channel and, in response to the detection of the MU-RTS transmission from AP1 on the NPCA primary channel, may switch to the NPCA primary channel despite not sensing that the BSS primary channel is busy (e.g., despite not sensing the OBSS transmission from STA2). In some examples, at 325 after the TXOP duration 305 expires, AP1, STA1, and STA3 may switch from the NPCA primary channel to the BSS primary channel.

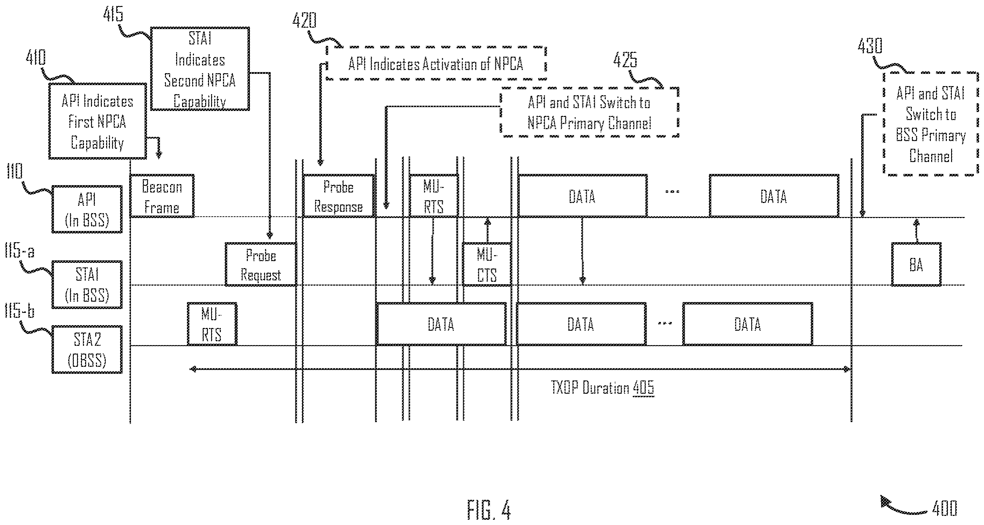

FIG. 4 illustrates an example timing diagram 400 to which one or more examples disclosed herein may be applied. The timing diagram 400 includes operations (e.g., signaling) performed at an AP 110 (denoted AP1), non-AP STA 115-a (denoted STA1), and non-AP STA 115-b (denoted STA2). The AP 110 and the non-AP STAs 115 may be examples of the corresponding devices illustrated by and described with reference to FIGs. 1, 2A, 2B, and 3. In the example of FIG. 4, AP1 and STA1 are associated with a BSS and STA 2 is associated with an OBSS. As illustrated in the example of FIG. 4, STA2 may perform one or more OBSS transmissions on a BSS primary channel associated with the BSS. AP1 and STA1 may be configured to employ one or more aspects of the present disclosure to coordinate NPCA communication between AP1 and STA1 irrespective of whether STA1 (or AP1) may detect OBSS transmissions from STA2 on the BSS primary channel.

As illustrated in the example of FIG. 4, AP1 and STA1 may support one or more behaviors and one or more signaling exchanges for STA1 to indicate (e.g., advertise) that the STA1 is NPCA-capable and intends to operate using NPCA (e.g., intends to enable the NPCA feature). Additionally, AP1 and STA1 may support one or more behaviors and one or more signaling exchanges for AP1 to enable or disable NPCA. In other words, FIG. 4 illustrates an example of how NPCA communication is established between AP1 and STA1.

At 410, AP1 may send a beacon frame that indicates a first NPCA capability associated with AP1 (e.g., a capability of AP1 to communicate via NPCA). In other words, at 410, AP1 sends a beacon frame with an element information (or field), which indicates that AP1 is NPCA-capable. In some examples, the beacon frame may also indicate that NPCA is enabled at AP1.

At 415, STA1 may transmit a probe request to AP1 indicating a second NPCA capability associated with STA1 (e.g., a capability of STA1 to communicate via NPCA). For example, STA1 may determine to operate in accordance with NPCA. In such an example, STA1 may indicate that STA1 is NPCA capable via an information element (or field) in a probe request. In some examples, STA1 may transmit the probe request based on AP1 indicating that AP1 is NPCA-capable and that NPCA is enabled at AP1. In some examples, the probe request may also indicate (e.g., explicitly or implicitly via the second NPCA capability) that STA1 intends to operate via NPCA.

At 420, in response to the probe request, AP1 may transmit a probe response that indicates, to STA1, activation of NPCA. For example, the probe request may reiterate that NPCA is enabled and indicate that STA1 may operate in accordance with NPCA (e.g., for subsequent communication with the AP). In other words, the probe response may activate NPCA communication between AP1 and STA1.

In some examples, the beacon frame (at 410), the probe request (at 415), and the probe response (at 420) may be communicated via the BSS primary channel. In some such examples, the probe response (at 420) may trigger AP1 and STA1 to switch from communicating on the BSS primary channel to communicating on the NPCA primary channel.

For example, at 425, AP1 and STA1 may switch to communicating via the NPCA primary channel based on the probe response indicating activation of NPCA communication between AP1 and STA1 (e.g., indicating that STA1 may indeed operate via NPCA for subsequent communication). Accordingly, after transmission of the probe response via the BSS primary channel (at 420), AP1 may transmit an MU-RTS via the NPCA primary channel. In some such examples, in response to the MU-RTS, STA1 may transmit an MU-CTS transmission via the NPCA primary channel.

In some examples, AP1 and STA1 may switch to the NPCA primary channel during a TXOP duration 405. In some such examples, after expiration of the TXOP duration 405, AP1 and STA1 may switch back to the BSS primary channel. For example, at 430, AP1 and STA1 may switch from the NPCA primary channel to the BSS primary channel.

Although the example of FIG. 4 illustrates AP1 indicating the first NPCA capability (and that NPCA is enabled at AP1) via the beacon frame, AP1 may indicate the first NPCA capability (and that NPCA is enabled at AP1) via one or more other types of frames. Additionally, although the example of FIG. 4 illustrates AP1 indicating activation of NPCA via the probe response, AP1 may indicate activation of NPCA via one or more other types of frames. In other words, AP1 may transmit information pertaining to NPCA (e.g., including the first NPCA capability indication) via one or more types of frames. For example, AP1 may be configured to transmit information pertaining to NPCA via a beacon frame, probe frame, and/or one or more other types of management or action frames.

In some examples, AP1 may transmit information pertaining to NPCA via one or more types of frames, which may include one or more operation elements (e.g., 802.11bn operation elements) or fields carrying the information pertaining to the NPCA. For example, an operation element carried in a beacon frame, a probe frame, and/or another type of management frame transmitted by the AP 110 may include information pertaining to the NPCA in the form of an element or field information. In some such examples, the operation element (e.g., the NPCA information carried in the operation element) may include information indicative of an NPCA primary channel (e.g., a 20 MHz channel where management and/or control information is transmitted if the BSS primary channel is assessed to be busy). Additionally, or alternatively, the operation element (or another operation element) may include information indicative of an NPCA operating bandwidth (e.g., a value indicating the operating bandwidth when an NPCA primary channel is used). Additionally, or alternatively, the operation element (or another operation element) may include information indicative of an NPCA center frequency index (e.g., an identifier pointing to the center of the (wider) NPCA primary channel). Additionally, or alternatively, the operation element (or another operation element) may include information indicating that NPCA is enabled or disabled (e.g., may include an indication as to whether the NPCA feature is enabled or disabled).

In some examples, information pertaining to the NPCA operating bandwidth and the NPCA center frequency index may be excluded from (e.g., not carried in) one or more operation elements transmitted from AP1. For example, the NPCA operating bandwidth may be equivalent to the BSS bandwidth minus the BSS primary channel and one or more (punctured) secondary channels. The one or more (punctured) secondary channels may include one or more secondary channels indicated in a disabled subchannel bitmap subfield included in the operation element or in an extremely high throughput (EHT) operation element. In such an example, AP1 may refrain from including the NPCA operating bandwidth and/or the NPCA center frequency index in an operation element transmitted to STA1 (e.g., in the beacon frame or probe response or another management frame).

Additionally, or alternatively, information indicating that NPCA is enabled or disabled may be excluded from (e.g., not carried in) the operation element. For example, STA1 may be configured to determine whether NPCA is enabled (or disabled) based on the presence (or absence) of other information pertaining to NPCA. In other words, AP1 may exclude an NPCA enabled or disable indicator from an operation element transmitted to STA1 (e.g., in the beacon frame or probe response or another management frame) for examples in which STA1 is configured to determine that NPCA is enabled or disabled based on the presence or absence of one or more other NPCA-related fields (e.g., a field indicating the location of NPCA primary channel). Additionally, or alternatively, AP1 may exclude an NPCA enabled or disable indicator from an operation element transmitted to STA1 for examples in which STA1 is configured to determine that NPCA is enabled or disabled based on whether the one or more other NPCA-related fields include valid information.

In some examples, AP1 may indicate that NPCA is enabled or disabled through an enhanced RTS or MU-RTS frame. For example, rather than indicating that NPCA is enabled via the beacon frame (at 410) or the probe response (at 420), AP1 may indicate that NPCA is enabled (or disabled) via the MU-RTS following the probe response. In other words, the AP1 may transmit multiple operational elements (e.g., in multiple frames) to indicate the first NPCA capability and that NPCA is enabled or disabled.

In some examples, AP1 may transmit information pertaining to the NPCA via a dedicated frame format in which an NPCA enabled or disabled indicator may be explicitly indicated. In some such examples, the NPCA enabled or disabled indicated may be explicitly indicated together with information pertaining to an NPCA primary channel, an NPCA operating bandwidth, and/or an NPCA center frequency index.

In some examples, in response to receiving information indicating that NPCA has been enabled or disabled (e.g., via a beacon frame, a probe frame, an enhanced RTS, MU-RTS, or another dedicated frame), STA1 may perform one or more actions. For example, AP1 may indicate that NPCA is enabled (or activated). In such an example, STA1 may determine to switch to the NPCA primary channel based on NPCA being enabled and based on one or more switching criteria being satisfied. In some other examples, AP1 may indicate that NPCA is disabled (or deactivated). In some such examples, STA1 may determine to remain on the BSS primary channel (e.g., to refrain from switching to the NPCA primary channel) based on NPCA being disabled. For example, in response to AP1 indicating that NPCA is disabled, STA1 may determine to refrain from switching to the NPCA primary channel irrespective of the one or more switching criteria being satisfied.

In some examples, the switching criteria may include a rule that indicates for a device performing packet detection (e.g., via energy detection), to switch to an alternative primary channel in response to the device detecting an OBSS transmission that overlaps with the BSS primary channel. Additionally, or alternatively, the switching criteria may include a rule that indicates for a device to switch to an alternative primary channel in response to the device decoding the packet from an OBSS transmission and determining, from the preamble of the OBSS transmission (e.g., from the basic NAV information), that the length of the OBSS transmission is long enough to prevent the device from transmitting for a particular duration.

As illustrated in the example of FIG. 4, STA1 may transmit a block acknowledgement (denoted BA) acknowledging reception of information indicating NPCA enablement or disablement (e.g., acknowledging reception of an NPCA enabled or disable indicator). In some examples, in response to the block acknowledgement, AP1 may determine that STA1 will switch to the NPCA primary channel based NPCA being enabled and based on one or more switching criteria being satisfied. Additionally, or alternatively, in response to the block acknowledgement, AP1 may determine that STA1 will refrain from switching to the NPCA primary channel based on NPCA being disabled irrespective of the one or more switching criteria being satisfied.

In some examples, in response to receiving the block acknowledgement (or the probe request) from STA1, AP1 may determine that STA1 is NPCA capable and intends to operate in NPCA. Accordingly, in some such examples, AP1 may perform one or more NPCA operations, such as select an NPCA primary channel and/or transmit information pertaining to NPCA to STA1. Additionally, or alternatively, in response to STA1 indicating that STA1 is NPCA-capable and intends to operate in NPCA, AP1 may switch to an NPCA primary channel (e.g., an indicated NPCA primary channel) based on the BSS primary channel being unavailable (e.g., busy).

In some examples, STA1 may transmit information to AP1 that indicates a status of an NPCA capability at STA1 (e.g., whether STA1 is NPCA capable). Additionally, or alternatively, STA1 may transmit, to AP1, a request to enable NPCA. In some such examples, STA1 may transmit the indication of the status and/or the request via an information element (e.g., via a dedicated information element or other field) in either the probe request or a reassociation request to AP1. In some examples, in addition to indicating that STA1 is NPCA-capable (which could implicitly indicate a request by STA1 to operate via NPCA), STA1 may also indicate (e.g., explicitly) whether STA1 intends to operate in NPCA while an NPCA capability is enabled at STA1. In other words, the probe request at 415 may indicate that STA1 is NPCA capable and that STA1 intends to operate in accordance with NPCA.

In some examples in which STA1 is NPCA-capable, AP1 may enable/disable NPCA communication for STA1. In other words, AP1 may activate or deactivate NPCA communication between AP1 and one or more NPCA-capable STAs irrespective of whether an NPCA capability of the one or more NPCA-capable STAs is enabled. In some such examples, AP1 may enable or disable NPCA communications per non-AP STA or per BSS. For example, AP1 may enable/disable NPCA for a single NPCA-capable STA (e.g., a particular NPCA-capable STA) or for multiple NPCA-capable STAs (e.g., each NPCA-capable STA) within the BSS.

In some examples, AP1 may determine to enable NPCA based on one or more criteria. In such an example, the criteria may include one or more STAs associated with AP1 being NPCA-capable. For example, AP1 may determine that a quantity of associated non-AP STAs are NPCA-capable and may determine to enable NPCA communications based on the quantity satisfying a threshold.

Additionally, or alternatively, the criteria may include AP1 and/or one or more NPCA-capable STAs supporting a bandwidth that satisfies a threshold bandwidth for NPCA. In other words, the criteria may include AP1 and/or one or more NPCA-capable STAs having a supported bandwidth (e.g., minimum supported bandwidth) or an operating bandwidth that is greater than a threshold (e.g., about 80 MHz or another suitable bandwidth). Additionally, or alternatively, the criteria may include one or more non-AP STAs associated with the AP1 enabling (or intending to enable) NPCA. For example, AP1 may determine that a quantity of associated non-AP STAs intend to enable NPCA. In such an example, AP1 may determine to enable NPCA communications based on the quantity satisfying a threshold.

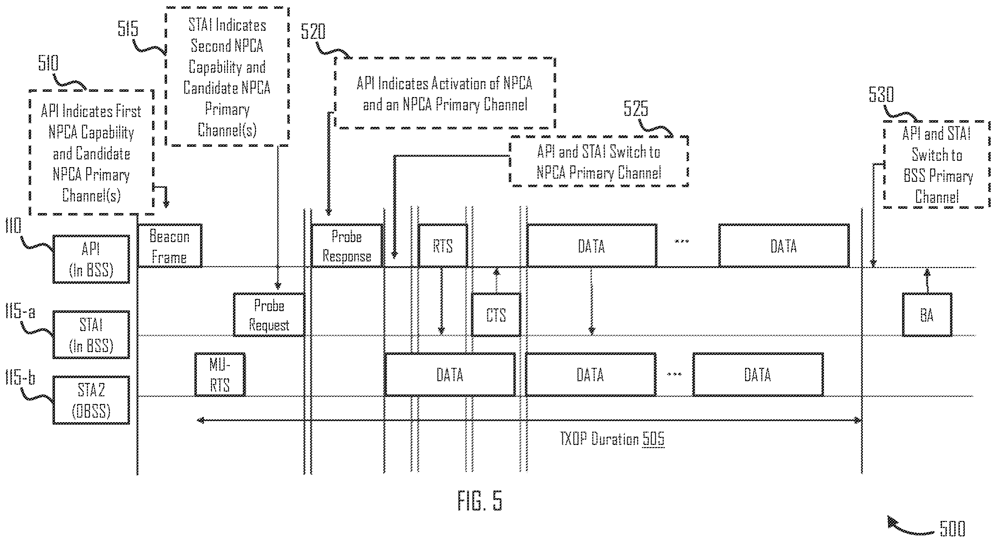

FIG. 5 illustrates an example timing diagram 500 to which one or more examples disclosed herein may be applied. The timing diagram 500 includes operations (e.g., signaling) performed at an AP 110 (denoted AP1), non-AP STA 115-a (denoted STA1), and non-AP STA 115-b (denoted STA2). The AP 110 and the non-AP STAs 115 may be examples of the corresponding devices illustrated by and described with reference to FIGs. 1, 2A, 2B, 3, and 4. In the example of FIG. 5, AP1 and STA1 are associated with a BSS and STA 2 is associated with an OBSS. As illustrated in the example of FIG. 5, STA2 may perform one or more OBSS transmissions on a BSS primary channel associated with the BSS. AP1 and STA1 may be configured to employ one or more aspects of the present disclosure to coordinate NPCA communication between AP1 and STA1 irrespective of whether STA1 (or AP1) may detect OBSS transmissions from STA2 on the BSS primary channel during a TXOP duration 505. FIG. 5 illustrates an example of how AP1 and STA1 may negotiate the selection of an NPCA primary channel.

In some examples, AP1 may select the NPCA primary channel using one or more criteria. The one or more criteria may indicate for AP1 to select an NPCA primary channel that is pre-defined or to select a pre-configured operating channel belonging to the same transmission bandwidth or BSS bandwidth for which an original transmission (e.g., an RTS transmission, a data transmission, a CTS transmission) was meant to occur using the BSS primary channel.

Additionally, or alternatively, the one or more criteria may indicate forAP1 to select an NPCA primary channel from among a set (e.g., a logical group) of pre-defined or pre-configured operating channels belonging to the same transmission bandwidth or BSS bandwidth for which a transmission was meant to occur using the BSS primary channel. In some such examples, the criteria may indicate for AP1 to select the NPCA primary channel according to one or more scheduling policies and/or load-balancing techniques (e.g., a round-robin). In some examples, in accordance with such criteria, AP1 may select the NPCA primary channel among secondary channels within the BSS bandwidth.

In some examples, AP1 may be configured to select the NPCA primary channel randomly (or uniformly randomly) among a set of pre-defined or pre-configured operating channels belonging to the same transmission bandwidth or BSS bandwidth for which a transmission was meant to occur using the BSS primary channel. In some such examples, the set of operating channels that may serve as NPCA-primary channels may be indicated by AP1, for example, via a bitmap that indicates one or more channels (e.g., which channel or channels) that may be used as the NPCA primary channel.

In some examples, the NPCA primary channel may be a pre-defined or pre-configured operating channel, which may (but does not necessarily) belong to the same transmission bandwidth or BSS bandwidth for which a transmission was meant to occur using the BSS primary channel.

In some examples, the selection of the NPCA-primary channel may be conditional on a position in the frequency-domain of the BSS primary channel. For example, AP1 may select the NPCA primary channel so that the BSS primary channel and the NPCA primary channel are not adjacent in the frequency-domain. In some examples, by selecting an NPCA primary channel that is not adjacent to the BSS primary channel, AP1 may reduce a likelihood of in-band emissions between the BSS primary channel and the NPCA primary channel. In some such examples, AP1 may select an NPCA primary channel that is separated from the BSS primary channel by *n x 20MHz* (where *n* ≥ 1). Additionally, or alternatively, AP1 may select an NPCA primary channel based on the NPCA primary channel satisfying a rejection level (e.g., a minimum rejection level), which identifies a tolerance to adjacent channel interference from the BSS primary channel. The rejection level may depend on one or more characteristics of the original transmission that was meant to occur using the BSS primary channel. For example, the rejection level may depend on a modulation and coding scheme (MCS) of the original transmission, a bandwidth of the original transmission, and/or a carrier frequency of the original transmission. In some examples, the rejection level may be measured by setting a signal strength 3 dB above the rate-dependent sensitivity and raising the power of the interfering signal of W MHz bandwidth until about 10% packet error-rate (PER) is caused for a physical layer convergence procedure (PLCP) service data unit (PSDU) length of 2048 octets (or another suitable quantity of octets) for binary phase-shift keying (BPSK) modulation with dual carrier modulation (DCM) (or 4096 octets for all other modulations). In some examples, the rejection levels used to define the adjacent rejection level for the NPCA primary channel may be pre-defined.

In some examples, AP1 may select the NPCA primary channel so that the NPCA primary channel falls within the operating bandwidth of the associated STAs (e.g., the operating bandwidth of STA1). Additionally, or alternatively, AP1 may select the NPCA primary channel based on one or more capabilities of the associated STAs (e.g., AP1 may account for the capabilities of the associated non-AP STAs). For example, AP1 may refrain from selecting an NPCA primary channel that is outside of a supported bandwidth of a non-AP STA that intends to participate to NPCA communications.

In some examples, such as examples in which multi-AP coordination is employed, AP1 may select an NPCA-primary channel to be common for multiple (e.g., all) non-AP STAs within a BSS. Additionally, or alternatively, AP1 may select an NPCA-primary channel to be common across multiple (e.g., all) non-AP STAs associated to BSSs which coordinate with each other.

In some examples, different NPCA primary channels may be assigned to non-AP STAs associated with different APs (e.g., non-AP STAs belonging to different BSSs). That is, in some examples, AP1 may assign multiple (e.g., different) NPCA primary channels to multiple (e.g., different) BSSs. In such an example, the NPCA-primary channel may be different for non-AP STAs associated with different APs (e.g., but common across non-AP STAs of the same BSS). In some other examples, the NPCA-primary channel may be the same for non-AP STAs associated with different APs.

In some examples, AP1 may use a coordination scheme to determine whether to select an NPCA primary channel that is common or different across coordinating BSSs. For example, for coordinated-spatial reuse (C-SR) the NPCA primary channel may be the same across coordinating BSSs.

In some examples in which a BSS includes co-hosted APs (e.g., APs belonging to a co-hosted BSSID set and share the same operating class, channels, and receive/transmit antenna connector) each co-hosted AP may broadcast a respective beacon frame (e.g., but all co-hosted APs use the same primary channel). In some such examples, NPCA-enabled APs belonging to the same BSSID set may use the same NPCA primary channel. Additionally, or alternatively, in some such examples, NPCA-enabled APs belonging to the same BSSID set may use the same switching criteria and/or triggers.

In some examples, APs belonging to a BSSID set, which have enabled NPCA, may have the same NPCA primary channel (e.g., as these APs may share the same antenna connector). Additionally, in some such examples, the switching criteria (e.g., criteria used to determine when to switch) may be applied in the same manner for the co-hosted APs. In some examples, APs that belong to a co-hosted BSSID set, which have enabled NPCA, may also have the same NPCA primary channel. In some such examples, AP1 may indicate the selected NPCA-primary channel through an operation element carried in a beacon frame, a probe frame, and/or another management frame. For example, as illustrated in the example of FIG. 5, AP1 may indicate an NPCA primary channel in the probe response at 520. In such an example, STA1 may use the indicated NPCA primary channel for NPCA operations (e.g., when STA1 operates the NPCA feature).

In some other examples, selection of the NPCA primary channel may be performed via a negotiation between an AP and its associated non-AP STAs. In some such examples, the negotiation may include one or multiple BSSs. For example, in response to an indication that an AP is NPCA-capable and NPCA is enabled, a non-AP STA may indicate one or more candidate NPCA-primary channels (e.g., a set of candidate NPCA primary channels) to the AP. In some examples, the non-AP STA may include the indication of the one or more candidate NPCA primary channels via a probe request, an association request, or a reassociation request (e.g., via a dedicated information element or a field). As illustrated in the example of FIG. 5, STA1 may indicate one or more candidate NPCA primary channels to AP1 via the probe request at 515.

In some examples, STA1 may select the one or more candidate NPCA primary channels from among a set of candidate NPCA primary channels provided by AP1. In some such examples, AP1 may provide the set of candidate NPCA primary channels to STA 1 via an operation element carried in a beacon frame, a probe frame, and/or another management frame. In the example of FIG. 5, AP1 may indicate a set of candidate NPCA primary channels to STA1 via a beacon frame at 510. In such an example, STA1 may select one or more candidate NPCA primary channels from among the indicated set. STA1 may then indicate the selected one or more candidate NPCA primary channels to AP1 via the probe request at 515. In response, AP1 may determine whether to use the one or more candidate NPCA primary channels indicated via the probe request. For example, the probe request may indicate a single candidate NPCA primary channel selected by STA1. In such an example, AP1 may accept (or reject) the single candidate NPCA primary channel selected by STA1 (and indicated via the probe request). Alternatively, the probe request may indicate multiple candidate NPCA primary channels selected by STA1. In some such examples, AP1 may select one of multiple candidate NPCA primary channels selected by STA1 (and indicated via the probe request). In some other examples, AP1 may reject the multiple candidate NPCA primary channels indicated via the probe request. In some such examples, AP1 may select another NPCA primary channel. That is, in response to receiving the probe request, AP1 may select a suitable NPCA-primary channel based on one or more criteria and/or one or more candidate NPCA primary channels indicated via the probe request.

In some examples, after an NPCA-primary channel is selected, AP1 may indicate the selected NPCA primary channel via a probe response, association response, or reassociation response (e.g., via a dedicated information element or via field information). As illustrated in the example of FIG. 5, AP1 may indicate the selected NPCA primary channel via the probe response at 520. In some examples, at 525, AP1 and STA1 may switch to the selected NPCA primary channel. In some such examples, at 530, AP1 and STA1 may switch back to the BSS primary channel (e.g., based on the expiration of the TXOP duration 505).

In some other examples, in response to receiving the probe request, AP1 may fail to identify a suitable NPCA primary channel and, as such, may refrain from transmitting the probe response (or may refrain from including NPCA information in the probe response). For example, an NPCA primary channel selected by STA1 may be unsuitable for AP1.

In some examples, an NPCA primary channel selected by AP1 may be unsuitable for STA1. For example, STA1 may be unable to use the NPCA primary channel selected by AP1 (and indicated via the probe response). In some such examples, STA1 may select another candidate NPCA primary channel to provide to AP1 (e.g., via another probe frame or other type of frame). In other words, the negotiation between AP1 and STA1 to identify a suitable NPCA primary channel may be iterative (e.g., AP1 and/or STA1 may repeatedly propose candidate NPCA primary channels until AP1 and STA1 agree on a suitable NPCA primary channel).

In some examples, the negotiation process may be applied to coordinated APs. In some such examples, coordinated APs may indicate (to each other) one or more candidate NPCA primary channels (e.g., a set of potential NPCA primary channels) and, based on the indicated candidate NPCA primary channels select a common NPCA primary channel across the multiple BSSs, or select a different NPCA primary channel across for each BSS.

In some other examples, AP1 and STA1 may negotiate multiple sets of operating channels, in which each set may include one primary channel that may be used as the NPCA primary channel. In some such examples, each set of operating channels and the NPCA primary channel may be selected semi-dynamically. In some examples, EDCA may fail on the NPCA primary channel. In some such examples, another (different) set of operating channels may be selected and the BSS primary channel within the (different) set of operating channels may be selected to operate as the NPCA-primary channel.

In some examples, one or more sets of operating channels may be the same size (e.g., may include the same quantity of operating channels). In some other examples, different sets of operating channels may include different quantities of channels and/or different total bandwidths. In some examples, a set of operating channels (e.g., each set of operating channels) may include consecutive/concurrent channels in the frequency-domain. In some examples, a set of operating channels (e.g., each set of operating channels) may be overlapping or partially overlapping in the frequency-domain (e.g., except for the BSS primary channel and the NPCA-primary channel, which are non-overlapping).

In some examples, after an NPCA primary channel is selected, AP1 (or STA1) may select a transmission bandwidth for one or more transmissions via the NPCA primary channel. In some such examples, AP1 (or STA1) may select the transmission bandwidth for a transmission on the NPCA primary channel based on one or more criteria. In some examples, the one or more criteria may indicate for the operating channels forming the transmission bandwidth to be the same as (or to include a subset of) an original transmission bandwidth associated with the original transmission that was meant to be performed using the BSS primary channel (which is assessed to be busy). In such an example, one of the operating channels of the original transmission bandwidth may serve as an NPCA primary channel.

In some other examples, the one or more criteria may indicate for the operating channels forming the transmission bandwidth to be orthogonal to a set of original operating channels that formed the original transmission bandwidth, except for one of the original operating channels, which may serve as an NPCA primary channel. In some examples, the one or more criteria may indicate for the operating channels forming the transmission bandwidth to be orthogonal to the set of original operating channels that formed the original transmission bandwidth, including one of the original operating channels, which may serve as an NPCA primary channel. In some examples, the one or more criteria may indicate for the operating channels forming the transmission bandwidth to be part of some (logical) pre-defined sets associated with a particular BSS primary channel or NPCA-primary channel.

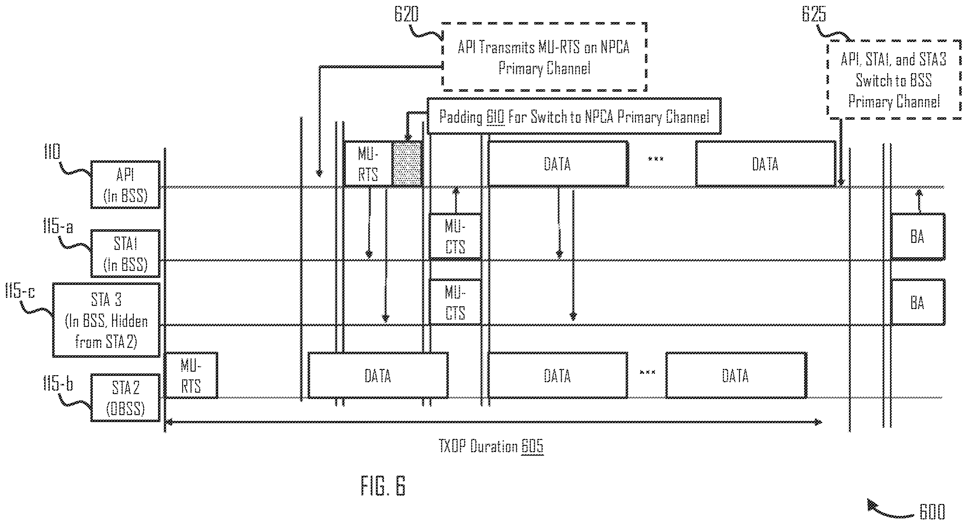

FIG. 6 illustrates an example timing diagram 600 to which one or more examples disclosed herein may be applied. The timing diagram 600 includes operations (e.g., signaling) performed at an AP 110 (denoted AP1), a non-AP STA 115-a (denoted STA1), a non-AP STA 115-b (denoted STA2), and a non-AP STA 115-c (denoted STA3). The AP 110 and the non-AP STAs 115 may be examples of the corresponding devices illustrated by and described with reference to FIGs. 1, 2A, 2B, 3, 4, and 5. In the example of FIG. 6, AP1, STA1, and STA3 are associated with a BSS and STA 2 is associated with an OBSS. As illustrated in the example of FIG. 6, STA3 is hidden from STA2 (and thus unable to detect transmission from STA2). For example, STA3 may be unable to detect an OBSS transmission from STA2 on a BSS primary channel associated with the BSS during a TXOP duration 605. AP1 and STA3 may be configured to employ one or more aspects of the present disclosure to coordinate NPCA communication between AP1 and STA3 irrespective of whether STA3 may detect OBSS transmissions on the BSS primary channel. FIG. 6 illustrates an example of how padding may be used to facilitate concurrent detection in the NPCA feature.

In some examples, due to challenges associated with hidden nodes, an AP and one or more NPCA capable non-AP STAs associated with the AP may lack a mechanism for determining (and may thus have ambiguity on) whether a BSS primary channel may be unavailable. For example, because STA3 is hidden from STA2, STA3 and AP1 may have different understanding as to whether they should switch to a NPCA primary channel and, in some cases, STA3 may continue to operate on the BSS (reference) primary channel despite AP1 switching to an NPCA primary channel. In some examples, NPCA may not properly work if an AP and an NPCA capable non-AP STA fail to switch, concurrently, to the same primary channel.

One or more aspects of the present disclosure may provide for an AP and one or more associated non-AP STAs to concurrently switch to the same primary channel. For example, in accordance with one or more aspects of the present disclosure, SA3 (e.g., a non-AP STA) may determine whether to switch to an NPCA primary channel by assessing whether one or more criteria (e.g., a given set of rules) are satisfied and/or by performing concurrent carrier sensing and/or packet detection of transmissions from AP1 in both the BSS primary channel and the NPCA primary channel. As used herein, carrier sensing refers to preparing for a transmission. Additionally, as used herein, packet detection refers to receiving a packet.

In some examples, STA3 may perform concurrent carrier sensing and packet detection to assess whether AP1 has switched to the NPCA primary channel. For example, based on concurrent carrier sensing and packet detection in both the BSS primary channel and the NPCA primary channel, STA3 may detect a transmission from AP1in the NPCA primary channel and, as such, may switch to the NPCA primary channel. In some examples, if STA3 determines that AP1 switched to the NPCA primary channel, STA3 may also switch to the NPCA primary channel (e.g., may follow AP1) irrespective of whether other conditions have been met that would prevent STA3 from switching.

In some examples, STA3 (e.g., an NPCA capable non-AP STA) may perform carrier sensing and/or packet detection concurrently on both the BSS primary channel and the NPCA primary channel. In some such examples, STA3 may detect a transmission from AP1 (e.g., an RTS or MU-RTS) on an NPCA primary channel for which STA3 is a participating non-AP STA (e.g., STA3 is associated with AP1 and has previously exchanged information with AP1 to activate NPCA communications between STA3 and AP1 via the NPCA primary channel). In some such examples, STA3 may independently switch to the NPCA primary channel based on assessing the NPCA primary channel to be idle. In some examples, STA3 may reply to AP1 (e.g., with a CTS or MU-CTS), on the NPCA primary channel. Additionally, or alternatively, in some examples, STA3 may disable (e.g., power off) a radio frequency (RF) chain used for monitoring the BSS primary channel until STA3 switches back to the BSS primary channel.

In some examples, an AP may add padding to one or more transmissions (e.g., an initial transmission) on the NPCA primary channel. For example, to compensate for possible switching delays originating from using multiple parallel RF chains and powering one of the RF chains off while operating on another RF chain, padding may be appended at the end of an initial transmission performed by the AP on the NPCA primary channel. In some examples, padding may be appended at the end of an initial transmission performed by the PA on the NPCA primary channel to enable an NPCA capable non-AP STA to properly detect a transmission from an associated AP on one of the two monitored channels and then perform switching. The initial transmission may include a transmission that triggers the non-AP STA to switch to the NPCA primary channel (or to switch back to the BSS primary channel). In some examples, for a non-AP STA configured to switch based on pre-defined rules, the switching may occur concurrently with the AP.

As illustrated in the example of FIG. 6, padding 610 may be appended to a MU-RTS transmission to enable STA3 to switch to the NPCA primary channel. In some examples, the length of the padding 610 may be pre-defined or configured (e.g., via AP1) based on a particular set of values that may depend on one or more capabilities of STA3 (e.g., based on one or more capabilities of the NPCA-capable non-AP STA). For example, at 620, AP1 may transmit the MU-RTS transmission to STA3 on the NPCA primary channel. The MU-RTS may indicate for STA3 (e.g., and STA1) to switch to the NPCA channel for the TXOP duration 605 (which may be set by STA2). In such an example, the MU-RTS may include the padding 610 to enable STA3 to detect the MU-RTS and then perform the switch to the NPCA primary channel. In some examples, the padding 610 may include one or more bits or characters that serve to fill unused space in (or extend) a packet, frame, or field. In some examples, the padding 610 may be added at the end of a transmission structure (as illustrated in the example of FIG. 6) or to another portion of the transmission structure. In some examples, the padding 610 may include null characters, blank characters, or bits set to a particular value (e.g., 1 or 0). As illustrated in the example of FIG. 6, at 625, AP1, STA1, and STA3 may switch back to the BSS primary channel in response to the TXOP duration 605 expiring (e.g., ending, lapsing).

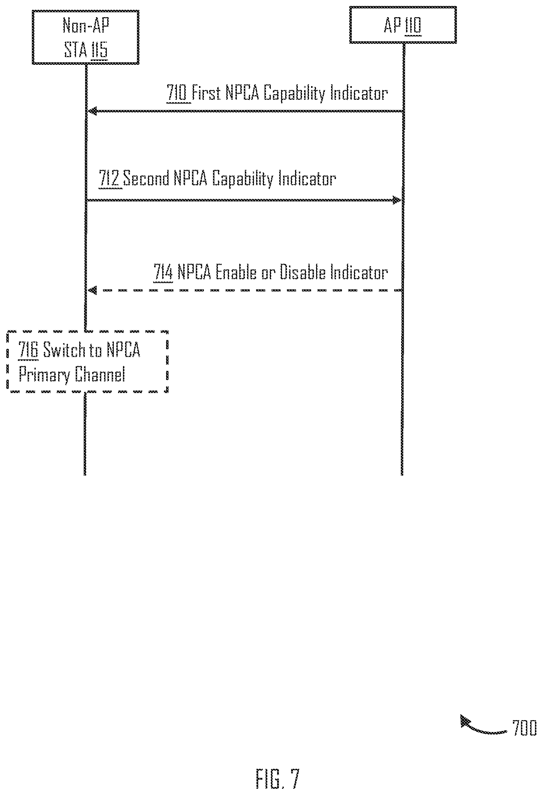

FIG. 7 illustrates an example signaling diagram 700 to which one or more examples disclosed herein may be applied. The signaling diagram 700 illustrates operations performed, such as within the system of FIG. 1 or 2A, by non-AP STA 115 and AP 110 in accordance with one or more aspects of the present disclosure. The non-AP STA 115 and AP 110 may be examples of the corresponding devices illustrated by and described with reference to FIGs. 1, 2A, 2B, 3, 4, 5, and 6. In some examples, the non-AP STA 115 and/or the AP 110 may be examples of a UE. One or more operations performed at the non-AP STA 115 and/or the AP 110 may be performed in a different order than the example order shown. Additionally, or alternatively, one or more operations performed at the non-AP STA 115 and/or the AP 110 may be omitted and/or one or more other operations may be added. The signaling diagram 700 may support a framework for concurrent reception for NPCA as described herein.

At 710, the AP 110 may transmit a first NPCA capability indicator to the non-AP STA 115. For example, the AP 110 may transmit a first message via a first primary channel associated with a BSS. The first message may be an example of a beacon frame, probe frame, and/or one or more other types of management frames illustrated by and described with reference to FIGs. 3-6. For example, the first message may include first information indicating the first NPCA capability (e.g., a first capability of the apparatus to communicate via NPCA).

At 712, the AP 110 may receive a second NPCA capability indicator from the non-AP STA 115. For example, the AP 110 may receive a second message from a second apparatus via the first primary channel in response to the first message. The second message may be an example of a probe frame, and/or one or more other types of management frames illustrated by and described with reference to FIGs. 3-6. For example, the second message include second information indicating the second NPCA capability (e.g., a second capability of the second apparatus to communicate via the NPCA).

In some examples, at 714, the AP 110 may transmit an NPCA enable or disable indicator to the non-AP STA 115. For example, the AP 110 may transmit third information indicating enablement of the first capability at the AP 110. In some examples, the AP 110 may transmit the first NPCA capability indicator and the NPCA enable or disable indicator in the same message. For example, the AP 110 may transmit a beacon frame indicating that the AP 110 is NPCA capable and that NPCA is enabled at the AP 110. In some other examples, the AP 110 may transmit the NPCA enable or disable indicator via another type of frame, such as an MU-RTS. In such an example, the MU-RTS may trigger the non-AP STA 115 to switch to an NPCA primary channel and may include padding (e.g., appended to the end of the MU-RTS) for the non-AP STA to perform the switch. For example, the AP 110 may transmit a message (e.g., the MU-RTS over multiple time-domain resources, in which a first one or more time-domain resources of the multiple time-domain resources are associated with (e.g., used for) the transmission of the third information, and a second one or more time-domain resources of the multiple time-domain resources include the padding for the non-AP STA to switch from the first primary channel to at least one primary channel associated with the NPCA. In some such examples, a length of the padding (e.g., a quantity of time-domain resources included in the second one or more time-domain resources) may be based on the second NPCA capability.

In some examples, the non-AP STA may respond to the first NPCA capability indicator and/or the NPCA enable or disable indicator. For example, in response to the first information and/or the third information, the AP 110 may receive fourth information indicating an acknowledgement of the enablement of the first capability (e.g., a block acknowledgement), a set of one or more candidate primary channels for the NPCA (e.g., an indication of one or more candidate NPCA primary channels), and/or the second NPCA capability indicator (e.g., an indication that the non-AP STA has the capability to detect packets on both the primary channel and at least one channel associated with the NPCA).

In some examples, the AP 110 may transmit the NPCA enable or disable indicator based on a quantity of non-AP STAs in the BSS having the capability to communicate via the NPCA, a capability of the AP 110 and/or the non-AP STA 115 to support a threshold bandwidth for NPCA, and/or a determination that one or more non-AP STAs in the BSS intend to communicate via the NPCA.

In some examples, the non-AP STA 115 and/or the AP 110 may perform carrier sensing and/or packet detection on the first primary channel and at least one primary channel associated with the NPCA. For example, in response to the AP 110 enabling NPCA (e.g., via an NPCA enable indicator), the non-AP STA 115 may determine whether to switch to the NPCA primary channel based on performing carrier sensing and/or packet detection on the first primary channel and at least one primary channel associated with the NPCA.

For example, if the non-AP STA 115 detects that the first primary channel (e.g., the BSS primary channel) is busy due to an OBSS transmission, and NPCA is enabled, the non-AP STA 115 may switch to the at least one primary channel associated with the NPCA. In some other examples, if the non-AP STA 115 does not detect that the first primary channel is busy (e.g., by monitoring the first primary channel), and also does not detect a transmission from the AP 110 via the at least one primary channel associated with the NPCA (e.g., by monitoring the at least one primary channel associated with the NPCA), the non-AP STA 115 may refrain from switching to the at least one primary channel associated with the NPCA. In some examples, however, if the non-AP STA 115 does not detect that the first primary channel is busy (e.g., by monitoring the first primary channel), and does detect a transmission from the AP 110 via the at least one primary channel associated with the NPCA (e.g., by monitoring the at least one primary channel associated with the NPCA), the non-AP STA may switch to the at least one primary channel associated with the NPCA.

In some other examples, in response to the AP 110 disabling NPCA (e.g., via an NPCA disable indicator), the non-AP STA 115 may refrain from switching to the at least one primary channel associated with the NPCA irrespective of the carrier sensing and/or packet detection.

In some examples, at 716, the non-AP STA 115 may switch to the NPCA primary channel. For example, based on the carrier sensing and/or packet detection, the non-AP STA 115 may detect a transmission from the AP 110 and, as such may determine that AP 110 switched to the NPCA primary channel. In such an example, the non-AP STA 115 may also switch to the NPCA primary channel (e.g., the non-AP STA 115 may follow the AP 110). In such an example, the non-AP STA 115 may receive one or more messages from the AP 110 via the NPCA primary channel.

In some examples, the AP 110 may provide NPCA-related information to the non-AP STA 115 via one or more types of frames. For example, the AP 110 may transmit a message to the non-AP STA 115 indicating a second primary channel for the NPCA, an indication of an operating bandwidth associated with the second primary channel, and/or an indication of a center frequency associated with the second primary channel. In some examples, the AP 110 may include the NPCA-related information in the same message as the first NPCA capability indicator and/or the NPCA enable or disable indicator.

In some examples, in response to the first NPCA capability indicator, the AP 110 may receive a request from the non-AP STA 115 to communicate via one or more primary channels associated with the NPCA. In some such examples, the AP 110 may transmit a message to the non-AP STA 115 indicating activation of the NPCA for communication between the AP 110 and the non-AP STA 115. For example, the message may indicate that the non-AP STA 115 may operate NPCA for subsequent (e.g., future) transmissions. In some examples, the message may also indicate a channel for the non-AP STA 115 to use as the NPCA primary channel. In some examples, by exchanging NPCA-related information, the AP 110 and the non-AP STA 115 may coordinate NPCA communication, which may lead to reduced latency and improved resource utilization.

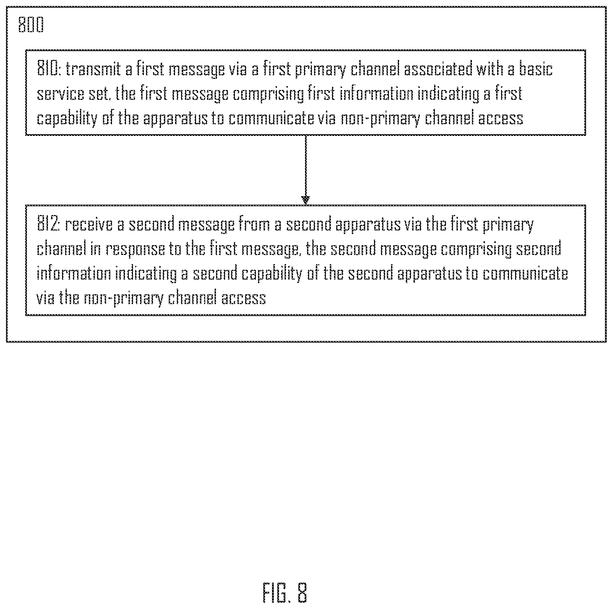

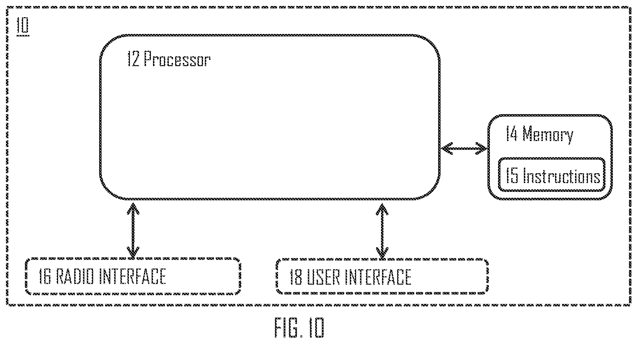

FIG. 8 illustrates an example flowchart 800 of a method to which one or more examples disclosed herein may be applied. The method may be computer-implemented. The method may be performed by a device, such as a UE or an AP illustrated by and described with reference to FIGs. 1, 2A, 2B, and 3-6. In some examples, the AP may be an example of an apparatus 10 illustrated by and described with reference to FIG. 10.

As shown in FIG. 8, the AP at block 810 transmits, to a second apparatus (e.g., a non-AP STA), a first message via a first primary channel associated with a basic service set. The first message comprises first information indicating a first capability of the AP to communicate via NPCA. For example, the AP may include the means (e.g., a processor 12, a memory 14, a radio interface 16) for transmitting, to the non-AP STA, a first message via a first primary channel associated with a basic service set, in which the first message comprises first information indicating a first capability of the AP to communicate via NPCA.

As shown in FIG. 8, the AP at block 812 receives a second message from the non-AP STA via the first primary channel in response to the first message. The second message comprises second information indicating a second capability of the non-AP STA to communicate via the NPCA. For example, the AP may include the means (e.g., a processor 12, a memory 14, a radio interface 16) for receiving a second message from the non-AP STA via the first primary channel in response to the first message, in which the second message comprises second information indicating a second capability of the non-AP STA to communicate via the NPCA.

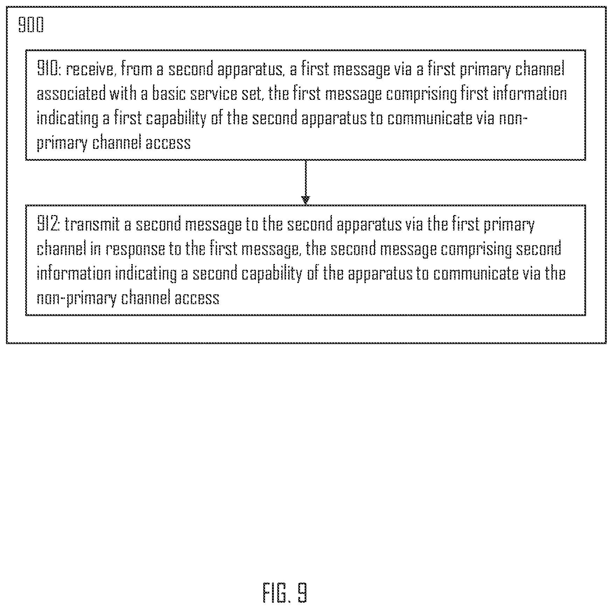

FIG. 9 illustrates an example flowchart 900 of a method to which one or more examples disclosed herein may be applied. The method may be computer-implemented. The method may be performed by a device, such as UE or non-AP STA illustrated by and described with reference to FIGs. 1-6. In some examples, the non-AP STA may be an example of an apparatus 10 illustrated by and described with reference to FIG. 9.

As shown in FIG. 9, the non-AP STA at block 910 receives, from a second apparatus (e.g., an AP), a first message via a first primary channel associated with a BSS. The first message comprises first information indicating a first capability of the AP to communicate via NPCA. For example, the AP may include the means (e.g., a processor 12, a memory 14, a radio interface 16) for receiving, from an AP, a first message via a first primary channel associated with a BSS, in which the first message comprises first information indicating a first capability of the AP to communicate via NPCA.

As shown in FIG. 9, the non-AP STA at block 912 transmits a second message to the AP via the first primary channel in response to the first message. The second message comprises second information indicating a second capability of the non-AP STA to communicate via the NPCA. For example, the non-AP STA may include the means (e.g., a processor 12, a memory 14, a radio interface 16) for transmitting a second message to the AP via the first primary channel in response to the first message, in which the second message comprises second information indicating a second capability of the apparatus to communicate via the NPCA.

FIG. 10 illustrates an example block diagram of an apparatus 10 to which one or more examples disclosed herein may be applied. FIG. 10 shows, by way of example, a block diagram of an apparatus 10. The apparatus 10 comprises, for example, at least one processor 12 and at least one memory 14 storing instructions 15 that, when executed by the at least one processor, cause the apparatus 10 at least to perform the method or methods as disclosed herein, and any of the embodiments thereof. In an example, the at least one memory and the instructions (e.g. a computer program code, software), are configured, with the at least one processor, to cause the apparatus 10 to perform the method or methods as disclosed herein, and any of the embodiments thereof.

A processor 12 may comprise circuitry, or be constituted as circuitry or circuitries, the circuitry or circuitries being configured to perform phases of methods in accordance with one or more example embodiments described herein. As used in this application, the term "circuitry" may refer to one or more or all of the following: (a) hardware-only circuit implementations, such as implementations in only analog and/or digital circuitry, and (b) combinations of hardware circuits and software, such as, as applicable: (i) a combination of analog and/or digital hardware circuit(s) with software/firmware and (ii) any portions of hardware processor(s) with software (including digital signal processor(s)), software, and memory(ies) that work together to cause an apparatus, such as a user equipment, to perform various functions) and (c) hardware circuit(s) and or processor(s), such as a microprocessor(s) or a portion of a microprocessor(s), that requires software (e.g., firmware) for operation, but the software may not be present when it is not needed for operation. This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

The memory 14 may be implemented using any suitable data storage technology. The memory may comprise a database for storing data. The memory 14 may be at least in part external to apparatus 10 but accessible to apparatus 10.

The instructions 15 may be comprised in a computer readable medium or a non-transitory computer readable medium. A term non-transitory, as used herein, is a limitation of the medium itself (i.e. tangible, not a signal) as opposed to a limitation on data storage persistency (e.g. random access memory, RAM, vs. read only memory, ROM).

For example, the apparatus 10 may be an AP, such as an AP of FIGs. 1, 2A, 2B, and 3-7. As another example, the apparatus may be comprised in such an AP, e.g. as a chipset configured to control the AP. The apparatus 10 may be caused or configured to perform at least the method of FIG. 8 and/or any one or more of the embodiments described.

As another example, the apparatus 10 may be a non-AP STA of FIGs. 1, 2A, 2B, and 3-7. In another example, the apparatus may be comprised in such a non-AP STA, e.g. as a chipset configured to control the non-AP STA The apparatus 10 may be caused or configured to perform at least the method of FIG. 9 and/or any one or more of the embodiments described.

In some examples, the apparatus 10 may be a UE, or another type of terminal device.

The apparatus may comprise one or more entities of any of protocol layers, such as a MAC entity, a radio resource control (RRC) entity, a radio link control (RLC) entity, a packet data convergence protocol (PDCP) entity or a PHY entity. In at least one embodiment, the entity is configured to perform at least the method of Figs. 8 and 9, and/or any one or more of the embodiments described herein.

In some examples, the apparatus 10 may include a radio interface 16. The radio interface 16 may provide the apparatus 10 with communication capabilities. The radio interface 16 may comprise a receiver configured to receive information in accordance with at least one cellular or non-cellular standard. The radio interface 16 may comprise a transmitter configured to transmit information in accordance with at least one cellular or non-cellular standard. The receiver may comprise more than one receiver. The transmitter may comprise more than one transmitter. The radio interface 16 may comprise a transceiver configured to receive and transmit information in accordance with at least one cellular or non-cellular standard. The transceiver may comprise more than one transceiver.

The apparatus 10 may comprise a user interface 18 comprising, for example, at least one of a keypad, a microphone, a touch display, a display, a speaker, etc. The user interface 18 may be used to control the apparatus by the user. The user interface 18 may be external to the apparatus 10. For example, the apparatus 10 may be connected to another device, such as a computer, either via wireless or wired connection, and the apparatus 10 is controlled by the user via the computer.

In some examples, the apparatus 10 may include a transceiver for transmitting and/or receiving signals. The transceiver may be implemented as a single integrated circuit (e.g., using a single application-specific integrated circuit (ASIC) or field-programmable gate array (FPGA)) or as a system-on-a-chip (SOC) that includes different modules for implementing the functionality of the transceiver. The apparatus 10 may also include the at least one processor 12 and/or the at least one memory 14. The at least one processor 12 may be used to execute instructions stored in the at least one memory 14 and/or to store information in the at least one memory 14, for example, such as the results of the executed instructions.

In some examples, the at least one processor 12 may be in communication with the at least one memory 14 via a bus for passing information among components of the apparatus 10. The at least one memory 14 may be non-transitory and may include, for example, one or more volatile and/or non-volatile memories. For example, the at least one memory 14 may be an electronic storage device (e.g., a computer readable storage medium) comprising gates configured to store data (e.g., bits) that may be retrievable by a machine (e.g., a computing device like the processor). The at least one memory 14 may be configured to store information, data, content, applications, instructions, or the like for enabling the apparatus to carry out various functions in accordance with an example embodiment of the present disclosure.

In some examples, the apparatus 10 includes one or more transceivers for transmitting and/or receiving signals, for example, over a backbone and/or over an access interface. A transceiver may be implemented as a single integrated circuit (e.g., using a single ASIC or FPGA) or as a SOC that includes different modules for implementing the functionality of the transceiver. In some examples, the apparatus 10 is implemented in or by a user device to which resources on an access interface may be allocated and assigned.

In some examples, the apparatus 10 is embodied in a chip or chip set. For example, the apparatus 10 may include one or more physical packages (e.g., chips) including materials, components and/or wires on a structural assembly (e.g., a baseboard). The structural assembly may provide physical strength, conservation of size, and/or limitation of electrical interaction for component circuitry included thereon. The apparatus 10 may therefore, in some cases, be configured to implement an embodiment of the present disclosure on a single chip or as a single system on a chip (SOC). As such, in some cases, a chip or chipset may constitute means for performing one or more operations for providing the functionalities described herein.

In some examples, the at least one processor 12 may be embodied in a number of different ways. For example, the at least one processor 12 may be implemented by processing circuitry. For example, the at least one processor 12 may be embodied as one or more of various hardware processing means such as a coprocessor, a microprocessor, a controller, a digital signal processor (DSP), a processing element with or without an accompanying DSP, or various other circuitry including integrated circuits such as, for example, an ASIC, an FPGA, a microcontroller unit (MCU), a hardware accelerator, a special-purpose computer chip, and/or the like. As such, in some embodiments, the at least one processor 12 may include one or more processing cores configured to perform independently. A multi-core processor may enable multiprocessing within a single physical package. Additionally, or alternatively, the at least one processor 12 may include one or more processors configured in tandem via the bus to enable independent execution of instructions, pipelining and/or multithreading.

In an example embodiment, the at least one processor 12 may be configured to execute instructions stored in the at least one memory 14 or otherwise accessible to the at least one processor 12. Alternatively, or additionally, the at least one processor 12 may be configured to execute hard coded functionality. As such, whether configured by hardware or software methods, or by a combination thereof, the at least one processor 12 may represent an entity (e.g., physically embodied in circuitry) capable of performing operations according to an embodiment of the present disclosure while configured accordingly. Thus, for example, when the at least one processor 12 is embodied as an ASIC, FPGA, and/or the like, the at least one processor 12 may be specifically configured hardware for conducting the operations described herein. Alternatively, or additionally, as another example, when the at least one processor 12 is embodied as an executor of instructions, the instructions may specifically configure the processor to perform the algorithms and/or operations described herein when the instructions are executed. However, in some cases, the at least one processor 12 may be a processor of a specific device (e.g., an image or video processing system) configured to employ an embodiment of the present disclosure by further configuration of the processor by instructions for performing the algorithms and/or operations described herein. The at least one processor 12 may include, among other things, a clock, an arithmetic logic unit (ALU), and/or logic gates configured to support operation of the at least one processor 12.

The radio interface 16 (e.g., a communication interface) may be a device and/or circuitry embodied in either hardware or a combination of hardware and software that is configured to receive and/or transmit data, including media content in the form of video or image files, one or more audio tracks, and/or the like. In this regard, the radio interface 16 may include, for example, an antenna (or multiple antennas) and supporting hardware and/or software for enabling communications with a wireless communication network. Additionally, or alternatively, the radio interface 16 may include the circuitry for interacting with the antenna(s) to cause transmission of signals via the antenna(s) or to handle receipt of signals received via the antenna(s). In some environments, the communication interface may alternatively or also support wired communication. As such, for example, the communication interface may include a communication modem and/or other hardware/software for supporting communication via cable, digital subscriber line (DSL), USB or other mechanisms.

In some examples, the apparatus 10 may be an access point (AP) or a non-AP station (STA) (e.g., such as a client device) usable in a Wi-Fi network capable of operating in accordance with wireless standards (e.g., IEEE 802.11 standards).

In at least one embodiment, at least some of the processes described herein may be carried out by an apparatus comprising means for carrying out at least some of the described processes. Means for performing methods as disclosed herein may include software and/or hardware components of the apparatus 10. For example, the at least one processor 12, the memory 14, and the computer program code form means for carrying out the method or methods as disclosed herein, and any of the embodiments thereof. The term "means" as used in the description and in the claims may refer to one or more individual elements configured to perform the corresponding recited functionality or functionalities, or it may refer to several elements that perform such functionality or functionalities. Furthermore, several functionalities recited in the claims may be performed by the same individual means or the same combination of means. For example, performing such functionality or functionalities may be caused in an apparatus by a processor that executes instructions stored in a memory of the apparatus.

Even though the present disclosure has been described above with reference to an example according to the accompanying drawings, it is clear that the present disclosure is not restricted thereto but can be modified in several ways within the scope of the appended claims. Therefore, all words and expressions should be interpreted broadly, and they are intended to illustrate, not to restrict, the embodiment. It will be obvious to a person skilled in the art that, as technology advances, the inventive concept can be implemented in various ways. Further, it is clear to a person skilled in the art that the described embodiments may, but are not required to, be combined with other embodiments in various ways.

## Claims

1. An apparatus (10, 110) comprising means for:
transmitting (810) a first message via a first primary channel associated with a basic service set, the first message comprising first information indicating a first capability of the apparatus to communicate via non-primary channel access; and
receiving (812) a second message from a second apparatus via the first primary channel in response to the first message, the second message comprising second information indicating a second capability of the second apparatus to communicate via the non-primary channel access.

2. The apparatus (10, 110) according to claim 1, further comprising means for:
transmitting third information indicating enablement of the first capability at the apparatus.

3. The apparatus (10, 110) according to claim 2, wherein the means for transmitting the third information is configured for:
transmitting a message comprising the third information over a plurality of time-domain resources, wherein a first one or more time-domain resources of the plurality of time-domain resources are associated with the transmission of the third information, and wherein a second one or more time-domain resources of the plurality of time-domain resources are associated with a switch from the first primary channel to at least one primary channel associated with the non-primary channel access.

4. The apparatus (10, 110) according to any one of claims 1 to 3, further comprising means for:
based at least in part on the second capability, transmitting a third message indicating activation of the non-primary channel access for communication between the apparatus and the second apparatus.

5. The apparatus (10, 110) according to claim 4, wherein the third message is indicative of at least one of the following: an indication of a second primary channel for the non-primary channel access, an indication of an operating bandwidth associated with the second primary channel, or an indication of a center frequency associated with the second primary channel.

6. The apparatus (10, 110) according to any one of claims 1 to 5, further comprising means for:
based at least in part on the first capability, performing at least one of carrier sensing or packet detection on the first primary channel and at least one primary channel associated with the non-primary channel access.

7. The apparatus (10, 110) according to any one of claims 1 to 5, further comprising means for:
based at least in part on the second capability, transmitting a fourth message to the second apparatus via a second primary channel associated with the non-primary channel access.

8. An apparatus (10, 115) comprising means for:
receiving (910), from a second apparatus, a first message via a first primary channel associated with a basic service set, the first message comprising first information indicating a first capability of the second apparatus to communicate via non-primary channel access; and
transmitting (912) a second message to the second apparatus via the first primary channel in response to the first message, the second message comprising second information indicating a second capability of the apparatus to communicate via the non-primary channel access.

9. The apparatus (10, 115) according to claim 8, further comprising means for:
receiving third information indicating enablement of the first capability at the second apparatus.

10. The apparatus (10, 115) according to claim 9, wherein, to receive the third information, the means for receiving third information is configured for:
receiving a message comprising the third information over a plurality of time-domain resources, wherein a first one or more time-domain resources of the plurality of time-domain resources are associated with reception of the third information, and wherein a second one or more time-domain resources of the plurality of time-domain resources are associated with a switch from the first primary channel to at least one primary channel associated with the non-primary channel access.

11. The apparatus (10, 115) according to any one of claims 8 to 10, further comprising means for:
based at least in part on the second capability, receiving a third message indicating activation of the non-primary channel access for communication between the apparatus and the second apparatus.

12. The apparatus (10, 115) according to any one of claims 8 to 11, further comprising means for:
based at least in part on the second capability, performing at least one of carrier sensing or packet detection on the first primary channel and a second primary channel associated with the non-primary channel access; and
based at least in part on the at least one of the carrier sensing or packet detection, determining to use the first primary channel or the second primary channel for communication with the second apparatus.

13. The apparatus (10, 115) according to any one of claims 8 to 12, further comprising means for:
based at least in part on the second capability, receiving a fourth message from the second apparatus via a second primary channel associated with the non-primary channel access.

14. A method (800) comprising:
transmitting (810) a first message via a first primary channel associated with a basic service set, the first message comprising first information indicating a first capability of the apparatus to communicate via non-primary channel access; and
receiving (812) a second message from a second apparatus via the first primary channel in response to the first message, the second message comprising second information indicating a second capability of the second apparatus to communicate via the non-primary channel access.

15. A method (900) comprising:
receiving (910) a first message via a first primary channel associated with a basic service set, the first message comprising first information indicating a first capability of an apparatus to communicate via non-primary channel access; and
transmitting (912), a second message to the apparatus via the first primary channel in response to the first message, the second message comprising second information indicating a second capability of a first apparatus to communicate via the non-primary channel access.
